# EUROPEAN PATENT APPLICATION

(11) **EP 4 709 020 A1**
(43) Date of publication of application: **11.03.2026**
(21) Application number: 24822523.7
(22) Date of filing: 24.05.2024
(51) Int. Cl.: H04W 74/08

(54) **COMMUNICATION METHOD AND RELATED APPARATUS**

(30) Priority: 13.06.2023 CN 202310703532
(71) Applicant: Huawei Technologies Co., Ltd., Shenzhen, Guangdong 518129 (CN)
(72) Inventor: SHI, Meng, Shenzhen, Guangdong 518129 (CN); LIAO, Shuri, Shenzhen, Guangdong 518129 (CN); DOU, Shengyue, Shenzhen, Guangdong 518129 (CN)
(74) Representative: Thun, Clemens
(86) International application number: PCT/CN2024/095349
(87) International publication number: WO 2024/255571

(57) **Abstract**

A communication method and a related apparatus are provided, and relate to the field of communication technologies. The method includes: A terminal device sends first information to a network device, and receives second information from the network device. Correspondingly, the network device receives the first information from the terminal device, and sends the second information to the terminal device. The first information is used to request uplink data transmission enhancement corresponding to the terminal device, and the first information is carried in a radio resource control RRC connection setup message of the terminal device. The second information indicates uplink data transmission enhancement corresponding to the terminal device. According to the method, the information for requesting uplink data transmission enhancement corresponding to the terminal device is carried in the RRC connection setup message, so that the network device can determine that uplink transmission performance of the terminal device needs to be enhanced. In this way, a signal path loss of a communication signal between the terminal device and the network device is overcome, and the uplink transmission performance is improved, so that the terminal device stably completes initial access.

## Description

This application claims priority to China Patent Application No. 202310703532.0, filed with the China National Intellectual Property Administration on June 13, 2023, and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

With the development of information technologies, modern communication systems have more urgent requirements for high efficiency, mobility, diversity, and the like of communication. Currently, in some important application scenarios, for example, in the fields of space communication, aviation communication, maritime communication, military communication, and the like, non-terrestrial network (non-terrestrial network, NTN) communication, represented by non-terrestrial devices such as satellites, uncrewed aerial vehicles, and high-altitude platforms, plays an irreplaceable role, to provide communication services for some regions such as oceans and forests.

Satellite communication is used as an example. In an initial access phase of a terminal device (user equipment, UE), a satellite serves as a base station to configure a random access resource for the UE, to implement random access of the UE. However, the satellite has a high movement speed relative to the ground, and a signal propagation distance is longer. Consequently, a signal path loss is greater when the satellite serves as the base station. This constrains uplink and downlink transmission performance, leading to low initial access performance of the UE.

Therefore, to enable a satellite to serve as a base station and provide a communication service for a UE, how to overcome a signal path loss of a communication signal between the UE and the satellite base station and improve uplink transmission performance to enable the UE to stably complete initial access becomes an urgent technical problem to be resolved.

### SUMMARY

Embodiments of this application provide a communication method and a related apparatus, to overcome a signal path loss of a communication signal between a UE and a satellite base station and improve uplink transmission performance, so that the UE stably completes initial access.

According to a first aspect, an embodiment of this application provides a communication method. The method may be performed by a communication apparatus. The communication apparatus may be a device sold as a whole, or may be a chip (system) or a circuit used in a device. This is not limited in this application. The method includes:
sending first information to a network device, where the first information is used to request uplink data transmission enhancement corresponding to a terminal device, and the first information is carried in a radio resource control RRC connection setup message of the terminal device; and
receiving second information from the network device, where the second information indicates uplink data transmission enhancement corresponding to the terminal device.

In this embodiment of this application, the communication method is provided. The terminal device sends the first information to the network device, and receives the second information from the network device. The terminal device herein may alternatively be a processor/chip that may be configured to execute computer-executable instructions. This is not limited in embodiments of this application.

The first information in this embodiment of this application is used to request uplink data transmission enhancement corresponding to the terminal device, specifically request how to perform uplink data transmission enhancement. This is not limited in embodiments of this application. For example, the first information may be used to request to transmit, by using a transport block over multi-slot (transport block over multi-slot, TBoMS) technology, one transport block (transport block, TB) of uplink data corresponding to the terminal device in a plurality of slots, with repeated transmission supported, may be used to request to repeatedly send one TB of the uplink data corresponding to the terminal device in a plurality of slots, or may be used to request to scale an information bit data amount (Ninfo) by using a transport block scaling (TB scaling) factor and equivalently further reduce a code rate through rate matching after encoding, to enhance uplink data transmission performance. In addition, the first information in this embodiment of this application is carried in the radio resource control (radio resource control, RRC) connection setup message of the terminal device, so that the terminal device can report a capability of the terminal device in an RRC connection initial access process, and the network device can learn of a capability supported by the terminal device, and determine whether uplink transmission performance of the terminal device needs to be enhanced, to enable the terminal device to stably complete initial access. However, currently, the terminal device does not have a capability of reporting the uplink transmission performance in the RRC connection initial access process, and the network device does not know the capability supported by the terminal device, and cannot determine whether the uplink transmission performance of the terminal device needs to be enhanced. Consequently, it cannot be ensured that the terminal device stably completes initial access.

The second information in this embodiment of this application indicates uplink data transmission enhancement corresponding to the terminal device, specifically indicates how to perform uplink data transmission enhancement. This is not limited in embodiments of this application. For example, when the first information is used to request to perform uplink data transmission enhancement in a specific manner, the second information indicates to perform uplink data transmission enhancement in the manner requested by using the first information. When the first information only requests to perform uplink data transmission enhancement, but does not request to perform uplink data transmission enhancement in a specific manner, the second information indicates that a manner of performing uplink data transmission enhancement may be determined by the network device.

Currently, in the initial access process of the terminal device, the terminal device has not reported the capability of the terminal device, and the network device does not know the capability supported by the terminal device, and cannot determine whether the uplink transmission performance of the terminal device needs to be enhanced.

In this embodiment of this application, the information for requesting uplink data transmission enhancement corresponding to the terminal device is carried in the RRC connection setup message, so that the terminal device can report the capability of the terminal device for the uplink transmission performance in the RRC connection initial access process, and the network device can learn of the uplink transmission performance of the terminal device, and determine that the uplink transmission performance of the terminal device needs to be enhanced. In this way, a signal path loss of a communication signal between a UE and the network device (a satellite base station) is overcome, and the uplink transmission performance is improved, so that the UE stably completes initial access.

It may be understood that the first information used to request uplink data transmission enhancement corresponding to the terminal device is reported to the network device in the RRC connection initial access process of the terminal device, so that the network device can learn of the uplink transmission performance of the terminal device as early as possible in the RRC connection initial access process, and further determine that the uplink transmission performance of the terminal device needs to be enhanced, enabling the UE to stably complete initial access. Specifically, the first information may be reported to the network device by using the RRC connection setup message in the RRC connection initial access process, or the first information may be reported to the network device by using another message in the RRC connection initial access process. This is not limited in embodiments of this application.

With reference to the first aspect, in a possible implementation, in a four-step random access procedure of the terminal device, the RRC connection setup message is carried in a message 3, and the second information is carried in a message 4.

**In** this implementation of this application, a possible specific implementation of locations at which the first information and the second information are carried is provided. Specifically, the RRC connection setup message is carried in the message 3 (Msg3) in the four-step random access procedure, and the second information is carried in the message 4 (Msg4) in the four-step random access procedure. According to this embodiment of this application, in the four-step random access procedure of the terminal device, the message 3 (Msg3) is used to carry the first information for requesting uplink data transmission enhancement, so that the network device can determine that the uplink transmission performance of the terminal device needs to be enhanced; and the message 4 (Msg4) is used to carry the second information indicating uplink data transmission enhancement, so that transmission performance for a message 5 (Msg5) and subsequent uplink data can be enhanced. In this way, the signal path loss of the communication signal between the terminal device and the network device is overcome, and the uplink transmission performance is improved, so that the terminal device stably completes initial access.

With reference to the first aspect, in a possible implementation, in a two-step random access procedure of the terminal device, the RRC connection setup message is carried in a message A, and the second information is carried in a message B.

**In** this implementation of this application, a possible specific implementation of locations at which the first information and the second information are carried is provided. Specifically, the RRC connection setup message is carried in the message A (MsgA) in the two-step random access procedure, and the second information is carried in the message B (MsgB) in the two-step random access procedure. According to this embodiment of this application, in the two-step random access procedure of the terminal device, the message A (MsgA) is used to carry the first information for requesting uplink data transmission enhancement, so that the network device can determine that the uplink transmission performance of the terminal device needs to be enhanced; and the message B (MsgB) is used to carry the second information indicating uplink data transmission enhancement, so that transmission performance for subsequent uplink data can be enhanced. In this way, the signal path loss of the communication signal between the terminal device and the network device is overcome, and the uplink transmission performance is improved, so that the terminal device stably completes initial access.

With reference to the first aspect, in a possible implementation, the first information includes one bit, a value of the bit is a first value, and the first value indicates that uplink data transmission enhancement corresponding to the terminal device is requested.

In this implementation of this application, a possible specific implementation of the first information is provided. Specifically, the first information includes the bit, and different values may be assigned to the bit, to indicate that uplink data transmission enhancement corresponding to the terminal device is requested or not requested. For example, if the value of the bit is the first value, it indicates that uplink data transmission enhancement corresponding to the terminal device is requested. It may be understood that a reserved bit in the RRC connection setup message may be reused as the bit, and a function of the reserved bit in indicating that uplink data transmission enhancement is requested is enabled. Alternatively, the bit may be a bit newly added in the RRC connection setup message. This is not limited in embodiments of this application.

Optionally, if the value of the bit is a second value, it indicates that uplink data transmission enhancement corresponding to the terminal device is not requested. The first value is different from the second value.

Optionally, if the value of the bit is null, it indicates that uplink data transmission enhancement corresponding to the terminal device is not requested. Alternatively, if the bit included in the first information does not exist, it may indicate that uplink data transmission enhancement corresponding to the terminal device is not requested.

With reference to the first aspect, in a possible implementation, the RRC connection setup message of the terminal device is carried in a media access control MAC layer data packet, and a packet header of the MAC layer data packet includes a corresponding logical channel identifier indicating uplink data transmission enhancement corresponding to the terminal device.

In this implementation of this application, a possible specific implementation of indicating uplink data transmission enhancement is provided. Specifically, the request for uplink data transmission enhancement by using the RRC connection setup message may alternatively be indicated by the logical channel identifier (logical channel ID, LCID) in the media access control (media access control, MAC) layer data packet. It may be understood that the RRC connection setup message used to carry the request for uplink data transmission enhancement is carried in the MAC layer data packet, and when the packet header of the MAC layer data packet includes the logical channel identifier corresponding to uplink data transmission enhancement corresponding to the terminal device, the logical channel identifier indicates that uplink data transmission enhancement corresponding to the terminal device is requested.

With reference to the first aspect, in a possible implementation, the second information includes at least one of the following: a number of slots occupied by a transport block over multi-slot TBoMS and a number of repetitions of transmission with the TBoMS.

The second information specifically indicates to transmit the uplink data corresponding to the terminal device by using the TBoMS.

In this implementation of this application, a possible specific implementation of the second information is provided. Specifically, when the first information is specifically used to request to transmit, by using the TBoMS technology, one TB of the uplink data corresponding to the terminal device in a plurality of slots, with repeated transmission supported, to enhance uplink data transmission, the second information includes but is not limited to the number of slots occupied by the TBoMS and the number of repetitions of transmission with the TBoMS. In this case, the second information specifically indicates to transmit the uplink data corresponding to the terminal device by using the TBoMS.

With reference to the first aspect, in a possible implementation, the method further includes:
receiving third information from the network device, where the third information indicates that in a case of time division multiplexing transmission, a slot occupied by uplink data transmission corresponding to the terminal device is different from a slot occupied by transmission of a message 1 in the four-step random access procedure corresponding to the terminal device, or the slot occupied by uplink data transmission corresponding to the terminal device is different from a slot occupied by transmission of the message A in the two-step random access procedure corresponding to the terminal device.

In this implementation of this application, a possible specific implementation of resolving a conflict between an uplink data transmission occasion and an access occasion is provided. Specifically, the terminal device receives the third information from the network device, and can avoid the conflict between the uplink data transmission occasion and the access occasion based on the third information. The third information indicates that in the case of time division multiplexing transmission, the slot occupied by uplink data transmission is different from the slot occupied by transmission of the message 1 (Msg1) in the four-step random access procedure, to avoid the conflict between the uplink data transmission occasion and the access occasion. Alternatively, the third information indicates that in the case of time division multiplexing transmission, the slot occupied by uplink data transmission is different from the slot occupied by transmission of the message A (MsgA) in the two-step random access procedure, to avoid the conflict between the uplink data transmission occasion and the access occasion.

Currently, in the initial access process of the terminal device, consecutive slots are used for uplink data transmission. In a scenario in which an uplink budget is limited and an uplink channel resource is limited, a transmission resource for the uplink data may conflict with an access resource for the access occasion, causing low initial access performance of the UE.

In this embodiment of this application, with the indication of the third information, the slot occupied by uplink data transmission avoids a slot occupied by the access occasion, to avoid a conflict between the transmission resource for the uplink data and the access resource for the access occasion. This improves the uplink transmission performance, so that the UE stably completes initial access.

With reference to the first aspect, in a possible implementation, the third information further indicates that in a case of frequency division multiplexing transmission, the slot occupied by uplink data transmission corresponding to the terminal device is consecutive uplink slots.

In this implementation of this application, a possible specific implementation of the third information is provided. Specifically, the third information further indicates that in the case of frequency division multiplexing transmission, the slot occupied by uplink data transmission corresponding to the terminal device is consecutive uplink slots. It may be understood that because frequency division multiplexing transmission is used for uplink data transmission and random access message transmission, there is no problem that the uplink data transmission occasion conflicts with the access occasion. In this scenario, the slot occupied by uplink data transmission corresponding to the terminal device may be consecutive uplink slots, and the slot occupied by uplink data transmission may be different from or the same as the slot occupied by the access occasion. This may be specifically determined based on a requirement of the network device.

With reference to the first aspect, in a possible implementation, the method further includes:
receiving a first broadcast signal from the network device; and
when energy of the first broadcast signal is less than a first threshold, determining uplink data transmission enhancement corresponding to the terminal device; or
when the energy of the first broadcast signal is less than a second threshold, determining that transmission enhancement for the uplink data corresponding to the terminal device starts from the message 3 or the message A.

In this implementation of this application, a possible specific implementation of determining uplink data transmission enhancement is provided. Specifically, the terminal device receives the first broadcast signal from the network device, and determines, based on the energy of the first broadcast signal, uplink data transmission enhancement corresponding to the terminal device. It may be understood that the first broadcast signal may be cell-level information required in the initial access process of the terminal device, such as a synchronization signal block (synchronization signal block, SSB) or a system information block 1 (system information block 1, SIB1), and the energy of the first broadcast signal may be signal quality. When the energy of the first broadcast signal is less than the first threshold, uplink data transmission enhancement corresponding to the terminal device is determined. In this case, an energy level of the first broadcast signal received is measured to determine whether to request uplink data transmission enhancement corresponding to the terminal device, to implement transmission performance enhancement for the message 5 (Msg5) and the subsequent uplink data in the four-step random access procedure. Alternatively, when the energy of the first broadcast signal is less than the second threshold, it is determined that transmission enhancement for the uplink data corresponding to the terminal device starts from the message 3 (Msg3) or the message A (MsgA). In this case, the energy level of the first broadcast signal received is measured to determine whether to request uplink data transmission enhancement corresponding to the terminal device, to implement transmission performance enhancement for the message 3 (Msg3) or the message A (MsgA) and subsequent uplink data.

In this embodiment of this application, the energy level of the first broadcast signal may be measured to determine that uplink data transmission enhancement corresponding to the terminal device needs to be requested, so that the network device can determine that the uplink transmission performance of the terminal device needs to be enhanced. In this way, the signal path loss of the communication signal between the UE and the network device (the satellite base station) is overcome, and the uplink transmission performance is improved, so that the UE stably completes initial access.

Optionally, the method further includes:
when the energy of the first broadcast signal is less than the second threshold, further determining that uplink transmission enhancement for the uplink data corresponding to the terminal device starts from the message 3 or the message A and uplink transmission enhancement ends upon receipt of an RRC reconfiguration message.

With reference to the first aspect, in a possible implementation, the first threshold is carried in a second broadcast signal, the first threshold is a threshold for signal quality corresponding to the first broadcast signal or the second broadcast signal, and the signal quality includes any one or more of the following:
reference signal received power RSRP, reference signal received quality RSRQ, a received signal strength indicator RSSI, a signal to interference plus noise ratio SINR, and a signal-to-noise ratio SNR.

In this implementation of this application, a possible specific implementation of the first threshold is provided. Specifically, the first threshold is carried in the second broadcast signal, and the first threshold is the threshold for the signal quality corresponding to the first broadcast signal or the second broadcast signal. It may be understood that the first broadcast signal and the second broadcast signal may be a same broadcast signal, or may be different broadcast signals. This is not limited in this application. The signal quality corresponding to the broadcast signal may include but is not limited to the reference signal received power (reference signal received power, RSRP), the reference signal received quality (reference signal received quality, RSRQ), the received signal strength indicator (received signal strength indicator, RSSI), the signal to interference plus noise ratio (signal to interference plus noise ratio, SINR), and the signal-to-noise ratio (signal-to-noise ratio, SNR). When the first broadcast signal and the second broadcast signal are a same broadcast signal, the first threshold is carried in the broadcast signal and is a threshold for signal quality corresponding to the broadcast signal. Energy of the broadcast signal is compared with a value of the first threshold to measure an energy level of the broadcast signal received, to determine whether to request uplink data transmission enhancement corresponding to the terminal device, to implement transmission performance enhancement for the message 5 (Msg5) and the subsequent uplink data. When the first broadcast signal and the second broadcast signal are different broadcast signals, the first threshold is carried in the second broadcast signal and is the threshold for the signal quality corresponding to the first broadcast signal or the second broadcast signal. The energy of the first broadcast signal is compared with the value of the first threshold to measure the energy level of the first broadcast signal received, to determine whether to request uplink data transmission enhancement corresponding to the terminal device, to implement transmission performance enhancement for the message 5 (Msg5) and the subsequent uplink data.

With reference to the first aspect, in a possible implementation, the second threshold is carried in a third broadcast signal, the second threshold is a threshold for signal quality corresponding to the message 3 or the message A, and the signal quality includes any one or more of the following:
a reference signal received power RSRP threshold, reference signal received quality RSRQ, a received signal strength indicator RSSI, a signal to interference plus noise ratio SINR, and a signal-to-noise ratio SNR.

In this implementation of this application, a possible specific implementation of the second threshold is provided. Specifically, the second threshold is carried in the third broadcast signal, and the second threshold is the threshold for the signal quality corresponding to the message 3 or the message A. It may be understood that the first broadcast signal and the third broadcast signal may be a same broadcast signal, or may be different broadcast signals. This is not limited in this application. The signal quality corresponding to the broadcast signal may include but is not limited to the reference signal received power (reference signal received power, RSRP), the reference signal received quality (reference signal received quality, RSRQ), the received signal strength indicator (received signal strength indicator, RSSI), the signal to interference plus noise ratio (signal to interference plus noise ratio, SINR), and the signal-to-noise ratio (signal-to-noise ratio, SNR). When the first broadcast signal and the third broadcast signal are a same broadcast signal, the second threshold is carried in the broadcast signal and is the threshold for the signal quality corresponding to the message 3 or the message A. Energy of the broadcast signal is compared with a value of the second threshold to measure an energy level of the broadcast signal received, to determine whether to request uplink data transmission enhancement corresponding to the terminal device, to implement transmission performance enhancement for the message 3 (Msg3) or the message A (MsgA) and the subsequent uplink data. When the first broadcast signal and the third broadcast signal are different broadcast signals, the second threshold is carried in the third broadcast signal and is the threshold for the signal quality corresponding to the message 3 or the message A. The energy of the first broadcast signal is compared with the value of the second threshold to measure the energy level of the first broadcast signal received, to determine whether to request uplink data transmission enhancement corresponding to the terminal device, to implement transmission performance enhancement for the message 3 (Msg3) or the message A (MsgA) and the subsequent uplink data.

According to a second aspect, an embodiment of this application provides a communication method. The method may be performed by a communication apparatus. The communication apparatus may be a device sold as a whole, or may be a chip (system) or a circuit used in a device. This is not limited in this application. The method includes:
receiving a first broadcast signal from a network device; and
when energy of the first broadcast signal is less than a first threshold, determining uplink data transmission enhancement corresponding to a terminal device; or
when the energy of the first broadcast signal is less than a second threshold, determining that transmission enhancement for uplink data corresponding to the terminal device starts from a message 3 or a message A.

In this embodiment of this application, the communication method is provided. The terminal device receives the first broadcast signal from the network device, and determines, based on the energy of the first broadcast signal, uplink data transmission enhancement corresponding to the terminal device. The terminal device herein may alternatively be a processor/chip that may be configured to execute computer-executable instructions. This is not limited in embodiments of this application.

The first broadcast signal in this embodiment of this application may be cell-level information required in an initial access process of the terminal device, such as a synchronization signal block (synchronization signal block, SSB) or a system information block 1 (system information block 1, SIB1), and the energy of the first broadcast signal may be signal quality. When the energy of the first broadcast signal is less than the first threshold, uplink data transmission enhancement corresponding to the terminal device is determined. It may be understood that in this case, an energy level of the first broadcast signal received is measured to determine whether to request uplink data transmission enhancement corresponding to the terminal device, to implement transmission performance enhancement for a message 5 (Msg5) and subsequent uplink data. Alternatively, when the energy of the first broadcast signal is less than the second threshold, it is determined that transmission enhancement for the uplink data corresponding to the terminal device starts from the message 3 (Msg3) or the message A (MsgA). It may be understood that in this case, the energy level of the first broadcast signal received is measured to determine whether to request uplink data transmission enhancement corresponding to the terminal device, to implement transmission performance enhancement for the message 3 (Msg3) or the message A (MsgA) and subsequent uplink data.

In this embodiment of this application, the energy level of the first broadcast signal may be measured to determine that uplink data transmission enhancement corresponding to the terminal device needs to be requested, so that the network device can determine that uplink transmission performance of the terminal device needs to be enhanced. In this way, a signal path loss of a communication signal between a UE and the network device (a satellite base station) is overcome, and the uplink transmission performance is improved, so that the UE stably completes initial access.

Optionally, the method further includes:
when the energy of the first broadcast signal is less than the second threshold, further determining that uplink transmission enhancement for the uplink data corresponding to the terminal device starts from the message 3 or the message A and uplink transmission enhancement ends upon receipt of an RRC reconfiguration message.

With reference to the second aspect, in a possible implementation, the first threshold is carried in a second broadcast signal, the first threshold is a threshold for signal quality corresponding to the first broadcast signal or the second broadcast signal, and the signal quality includes any one or more of the following:
reference signal received power RSRP, reference signal received quality RSRQ, a received signal strength indicator RSSI, a signal to interference plus noise ratio SINR, and a signal-to-noise ratio SNR.

In this implementation of this application, a possible specific implementation of the first threshold is provided. Specifically, the first threshold is carried in the second broadcast signal, and the first threshold is the threshold for the signal quality corresponding to the first broadcast signal or the second broadcast signal. It may be understood that the first broadcast signal and the second broadcast signal may be a same broadcast signal, or may be different broadcast signals. This is not limited in this application. The signal quality corresponding to the broadcast signal may include but is not limited to the reference signal received power (reference signal received power, RSRP), the reference signal received quality (reference signal received quality, RSRQ), the received signal strength indicator (received signal strength indicator, RSSI), the signal to interference plus noise ratio (signal to interference plus noise ratio, SINR), and the signal-to-noise ratio (signal-to-noise ratio, SNR). When the first broadcast signal and the second broadcast signal are a same broadcast signal, the first threshold is carried in the broadcast signal and is a threshold for signal quality corresponding to the broadcast signal. Energy of the broadcast signal is compared with a value of the first threshold to measure an energy level of the broadcast signal received, to determine whether to request uplink data transmission enhancement corresponding to the terminal device, to implement transmission performance enhancement for the message 5 (Msg5) and the subsequent uplink data. When the first broadcast signal and the second broadcast signal are different broadcast signals, the first threshold is carried in the second broadcast signal and is the threshold for the signal quality corresponding to the first broadcast signal or the second broadcast signal. The energy of the first broadcast signal is compared with the value of the first threshold to measure the energy level of the first broadcast signal received, to determine whether to request uplink data transmission enhancement corresponding to the terminal device, to implement transmission performance enhancement for the message 5 (Msg5) and the subsequent uplink data.

With reference to the second aspect, in a possible implementation, the second threshold is carried in a third broadcast signal, the second threshold is a threshold for signal quality corresponding to the message 3 or the message A, and the signal quality includes any one or more of the following:
a reference signal received power RSRP threshold, reference signal received quality RSRQ, a received signal strength indicator RSSI, a signal to interference plus noise ratio SINR, and a signal-to-noise ratio SNR.

In this implementation of this application, a possible specific implementation of the second threshold is provided. Specifically, the second threshold is carried in the third broadcast signal, and the second threshold is the threshold for the signal quality corresponding to the message 3 or the message A. It may be understood that the first broadcast signal and the third broadcast signal may be a same broadcast signal, or may be different broadcast signals. This is not limited in this application. The signal quality corresponding to the broadcast signal may include but is not limited to the reference signal received power (reference signal received power, RSRP), the reference signal received quality (reference signal received quality, RSRQ), the received signal strength indicator (received signal strength indicator, RSSI), the signal to interference plus noise ratio (signal to interference plus noise ratio, SINR), and the signal-to-noise ratio (signal-to-noise ratio, SNR). When the first broadcast signal and the third broadcast signal are a same broadcast signal, the second threshold is carried in the broadcast signal and is the threshold for the signal quality corresponding to the message 3 or the message A. Energy of the broadcast signal is compared with a value of the second threshold to measure an energy level of the broadcast signal received, to determine whether to request uplink data transmission enhancement corresponding to the terminal device, to implement transmission performance enhancement for the message 3 (Msg3) or the message A (MsgA) and the subsequent uplink data. When the first broadcast signal and the third broadcast signal are different broadcast signals, the second threshold is carried in the third broadcast signal and is the threshold for the signal quality corresponding to the message 3 or the message A. The energy of the first broadcast signal is compared with the value of the second threshold to measure the energy level of the first broadcast signal received, to determine whether to request uplink data transmission enhancement corresponding to the terminal device, to implement transmission performance enhancement for the message 3 (Msg3) or the message A (MsgA) and the subsequent uplink data.

According to a third aspect, an embodiment of this application provides a communication method. The method may be performed by a communication apparatus. The communication apparatus may be a device sold as a whole, or may be a chip (system) or a circuit used in a device. This is not limited in this application. The method includes:
receiving first information from a terminal device, where the first information is used to request uplink data transmission enhancement corresponding to the terminal device, and the first information is carried in a radio resource control RRC connection setup request message of the terminal device; and
sending second information to the terminal device, where the second information indicates uplink data transmission enhancement corresponding to the terminal device.

In this embodiment of this application, the communication method is provided. A network device receives the first information from the terminal device, and sends the second information to the terminal device. The network device herein may alternatively be a processor/chip that may be configured to execute computer-executable instructions. This is not limited in embodiments of this application.

The first information in this embodiment of this application is used to request uplink data transmission enhancement corresponding to the terminal device, specifically request how to perform uplink data transmission enhancement. This is not limited in embodiments of this application. For example, the first information may be used to request to transmit, by using a transport block over multi-slot (transport block over multi-slot, TBoMS) technology, one transport block (transport block, TB) of uplink data corresponding to the terminal device in a plurality of slots, with repeated transmission supported, may be used to request to repeatedly send one TB of the uplink data corresponding to the terminal device in a plurality of slots, or may be used to request to scale an information bit data amount (Ninfo) by using a transport block scaling (TB scaling) factor and equivalently further reduce a code rate through rate matching after encoding, to enhance uplink data transmission performance. In addition, the first information in this embodiment of this application is carried in the radio resource control (radio resource control, RRC) connection setup message of the terminal device.

The second information in this embodiment of this application indicates uplink data transmission enhancement corresponding to the terminal device, specifically indicates how to perform uplink data transmission enhancement. This is not limited in embodiments of this application. For example, when the first information is used to request to perform uplink data transmission enhancement in a specific manner, the second information indicates to perform uplink data transmission enhancement in the manner requested by using the first information. When the first information only requests to perform uplink data transmission enhancement, but does not request to perform uplink data transmission enhancement in a specific manner, the second information indicates that a manner of performing uplink data transmission enhancement may be determined by the network device.

Currently, in an initial access process of the terminal device, the terminal device has not reported a capability of the terminal device, and the network device does not know a capability supported by the terminal device, and cannot determine whether uplink transmission performance of the terminal device needs to be enhanced.

In this embodiment of this application, the information for requesting uplink data transmission enhancement corresponding to the terminal device is carried in the RRC connection setup message, so that the network device can determine that the uplink transmission performance of the terminal device needs to be enhanced. In this way, a signal path loss of a communication signal between a UE and the network device (a satellite base station) is overcome, and the uplink transmission performance is improved, so that the UE stably completes initial access.

With reference to the third aspect, in a possible implementation, in a four-step random access procedure of the terminal device, the RRC connection setup message is carried in a message 3, and the second information is carried in a message 4.

In this implementation of this application, a possible specific implementation of locations at which the first information and the second information are carried is provided. Specifically, the RRC connection setup message is carried in the message 3 (Msg3) in the four-step random access procedure, and the second information is carried in the message 4 (Msg4) in the four-step random access procedure. According to this embodiment of this application, in the four-step random access procedure of the terminal device, the message 3 (Msg3) is used to carry the first information for requesting uplink data transmission enhancement, so that the network device can determine that the uplink transmission performance of the terminal device needs to be enhanced; and the message 4 (Msg4) is used to carry the second information indicating uplink data transmission enhancement, so that transmission performance for a message 5 (Msg5) and subsequent uplink data can be enhanced. In this way, the signal path loss of the communication signal between the terminal device and the network device is overcome, and the uplink transmission performance is improved, so that the terminal device stably completes initial access.

With reference to the third aspect, in a possible implementation, in a two-step random access procedure of the terminal device, the RRC connection setup message is carried in a message A, and the second information is carried in a message B.

In this implementation of this application, a possible specific implementation of locations at which the first information and the second information are carried is provided. Specifically, the RRC connection setup message is carried in the message A (MsgA) in the two-step random access procedure, and the second information is carried in the message B (MsgB) in the two-step random access procedure. According to this embodiment of this application, in the two-step random access procedure of the terminal device, the message A (MsgA) is used to carry the first information for requesting uplink data transmission enhancement, so that the network device can determine that the uplink transmission performance of the terminal device needs to be enhanced; and the message B (MsgB) is used to carry the second information indicating uplink data transmission enhancement, so that transmission performance for subsequent uplink data can be enhanced. In this way, the signal path loss of the communication signal between the terminal device and the network device is overcome, and the uplink transmission performance is improved, so that the terminal device stably completes initial access.

With reference to the third aspect, in a possible implementation, the first information includes one bit, a value of the bit is a first value, and the first value indicates that uplink data transmission enhancement corresponding to the terminal device is requested.

In this implementation of this application, a possible specific implementation of the first information is provided. Specifically, the first information includes the bit, and different values may be assigned to the bit, to indicate that uplink data transmission enhancement corresponding to the terminal device is requested or not requested. For example, if the value of the bit is the first value, it indicates that uplink data transmission enhancement corresponding to the terminal device is requested. It may be understood that a reserved bit in the RRC connection setup message may be reused as the bit, and a function of the reserved bit in indicating that uplink data transmission enhancement is requested is enabled. Alternatively, the bit may be a bit newly added in the RRC connection setup message. This is not limited in embodiments of this application.

Optionally, if the value of the bit is a second value, it indicates that uplink data transmission enhancement corresponding to the terminal device is not requested. The first value is different from the second value.

With reference to the third aspect, in a possible implementation, the RRC connection setup message of the terminal device is carried in a media access control MAC layer data packet, and a packet header of the MAC layer data packet includes a corresponding logical channel identifier indicating uplink data transmission enhancement corresponding to the terminal device.

In this implementation of this application, a possible specific implementation of indicating uplink data transmission enhancement is provided. Specifically, the request for uplink data transmission enhancement by using the RRC connection setup message may alternatively be indicated by the logical channel identifier (logical channel ID, LCID) in the media access control (media access control, MAC) layer data packet. It may be understood that the RRC connection setup message used to carry the request for uplink data transmission enhancement is carried in the MAC layer data packet, and when the packet header of the MAC layer data packet includes the logical channel identifier corresponding to uplink data transmission enhancement corresponding to the terminal device, the logical channel identifier indicates that uplink data transmission enhancement corresponding to the terminal device is requested.

With reference to the third aspect, in a possible implementation, the second information includes at least one of the following: a number of slots occupied by a transport block over multi-slot TBoMS and a number of repetitions of transmission with the TBoMS.

The second information specifically indicates to transmit the uplink data corresponding to the terminal device by using the TBoMS.

In this implementation of this application, a possible specific implementation of the second information is provided. Specifically, when the first information is specifically used to request to transmit, by using the TBoMS technology, one TB of the uplink data corresponding to the terminal device in a plurality of slots, with repeated transmission supported, to enhance uplink data transmission, the second information includes but is not limited to the number of slots occupied by the TBoMS and the number of repetitions of transmission with the TBoMS. In this case, the second information specifically indicates to transmit the uplink data corresponding to the terminal device by using the TBoMS.

With reference to the third aspect, in a possible implementation, the method further includes:
sending third information to the terminal device, where the third information indicates that in a case of time division multiplexing transmission, a slot occupied by uplink data transmission corresponding to the terminal device is different from a slot occupied by transmission of a message 1 in the four-step random access procedure corresponding to the terminal device, or the slot occupied by uplink data transmission corresponding to the terminal device is different from a slot occupied by transmission of the message A in the two-step random access procedure corresponding to the terminal device.

In this implementation of this application, a possible specific implementation of resolving a conflict between an uplink data transmission occasion and an access occasion is provided. Specifically, the network device sends the third information to the terminal device, to avoid the conflict between the uplink data transmission occasion and the access occasion of the terminal device by using the third information. The third information indicates that in the case of time division multiplexing transmission, the slot occupied by uplink data transmission is different from the slot occupied by transmission of the message 1 (Msg1) in the four-step random access procedure, to avoid the conflict between the uplink data transmission occasion and the access occasion. Alternatively, the third information indicates that in the case of time division multiplexing transmission, the slot occupied by uplink data transmission is different from the slot occupied by transmission of the message A (MsgA) in the two-step random access procedure, to avoid the conflict between the uplink data transmission occasion and the access occasion.

Currently, in the initial access process of the terminal device, consecutive slots are used for uplink data transmission. In a scenario in which an uplink budget is limited and an uplink channel resource is limited, a transmission resource for the uplink data may conflict with an access resource for the access occasion, causing low initial access performance of the UE.

In this embodiment of this application, with the indication of the third information, the slot occupied by uplink data transmission avoids a slot occupied by the access occasion, to avoid a conflict between the transmission resource for the uplink data and the access resource for the access occasion. This improves the uplink transmission performance, so that the UE stably completes initial access.

With reference to the third aspect, in a possible implementation, the third information further indicates that in a case of an FDD spectrum, the slot occupied by uplink data transmission corresponding to the terminal device is consecutive uplink slots. A frequency division multiplexing transmission manner is used in the FDD spectrum.

In this implementation of this application, a possible specific implementation of the third information is provided. Specifically, the third information further indicates that in the case of frequency division multiplexing transmission, the slot occupied by uplink data transmission corresponding to the terminal device is consecutive uplink slots. It may be understood that because frequency division multiplexing transmission is used for uplink data transmission and random access message transmission, there is no problem that the uplink data transmission occasion conflicts with the access occasion. In this scenario, the slot occupied by uplink data transmission corresponding to the terminal device may be consecutive uplink slots, and the slot occupied by uplink data transmission may be different from or the same as the slot occupied by the access occasion. This may be specifically determined based on a requirement of the network device.

With reference to the third aspect, in a possible implementation, the method further includes:
sending a first broadcast signal.

The first broadcast signal is used together with a first threshold to determine uplink data transmission enhancement corresponding to the terminal device; or
the first broadcast signal is used together with a second threshold to determine that transmission enhancement for the uplink data corresponding to the terminal device starts from the message 3 or the message A.

In this implementation of this application, a possible specific implementation of determining uplink data transmission enhancement is provided. Specifically, the network device sends the first broadcast signal, and the terminal device determines, by using energy of the first broadcast signal, uplink data transmission enhancement corresponding to the terminal device. It may be understood that the first broadcast signal may be cell-level information required in the initial access process of the terminal device, such as a synchronization signal block (synchronization signal block, SSB) or a system information block 1 (system information block 1, SIB1), and the energy of the first broadcast signal may be signal quality. When the energy of the first broadcast signal is less than the first threshold, uplink data transmission enhancement corresponding to the terminal device is determined. In this case, an energy level of the first broadcast signal received is measured to determine whether to request uplink data transmission enhancement corresponding to the terminal device, to implement transmission performance enhancement for a message 5 (Msg5) and subsequent uplink data. Alternatively, when the energy of the first broadcast signal is less than the second threshold, it is determined that transmission enhancement for the uplink data corresponding to the terminal device starts from the message 3 (Msg3) or the message A (MsgA). In this case, the energy level of the first broadcast signal received is measured to determine whether to request uplink data transmission enhancement corresponding to the terminal device, to implement transmission performance enhancement for the message 3 (Msg3) or the message A (MsgA) and subsequent uplink data.

In this embodiment of this application, the energy level of the first broadcast signal may be measured to determine that uplink data transmission enhancement corresponding to the terminal device needs to be requested, so that the network device can determine that the uplink transmission performance of the terminal device needs to be enhanced. In this way, the signal path loss of the communication signal between the UE and the network device (the satellite base station) is overcome, and the uplink transmission performance is improved, so that the UE stably completes initial access.

Optionally, the first broadcast signal is further used together with the second threshold to determine that uplink transmission enhancement for the uplink data corresponding to the terminal device starts from the message 3 or the message A and uplink transmission enhancement ends upon receipt of an RRC reconfiguration message.

With reference to the third aspect, in a possible implementation, the first threshold is carried in a second broadcast signal, the first threshold is a threshold for signal quality corresponding to the first broadcast signal or the second broadcast signal, and the signal quality includes any one or more of the following:
a reference signal received power RSRP threshold, reference signal received quality RSRQ, a received signal strength indicator RSSI, a signal to interference plus noise ratio SINR, and a signal-to-noise ratio SNR.

In this implementation of this application, a possible specific implementation of the first threshold is provided. Specifically, the first threshold is carried in the second broadcast signal, and the first threshold is the threshold for the signal quality corresponding to the first broadcast signal or the second broadcast signal. It may be understood that the first broadcast signal and the second broadcast signal may be a same broadcast signal, or may be different broadcast signals. This is not limited in this application. The signal quality corresponding to the broadcast signal may include but is not limited to the reference signal received power (reference signal received power, RSRP), the reference signal received quality (reference signal received quality, RSRQ), the received signal strength indicator (received signal strength indicator, RSSI), the signal to interference plus noise ratio (signal to interference plus noise ratio, SINR), and the signal-to-noise ratio (signal-to-noise ratio, SNR). When the first broadcast signal and the second broadcast signal are a same broadcast signal, the first threshold is carried in the broadcast signal and is a threshold for signal quality corresponding to the broadcast signal. Energy of the broadcast signal is compared with a value of the first threshold to measure an energy level of the broadcast signal received, to determine whether to request uplink data transmission enhancement corresponding to the terminal device, to implement transmission performance enhancement for the message 5 (Msg5) and the subsequent uplink data. When the first broadcast signal and the second broadcast signal are different broadcast signals, the first threshold is carried in the second broadcast signal and is the threshold for the signal quality corresponding to the first broadcast signal or the second broadcast signal. The energy of the first broadcast signal is compared with the value of the first threshold to measure the energy level of the first broadcast signal received, to determine whether to request uplink data transmission enhancement corresponding to the terminal device, to implement transmission performance enhancement for the message 5 (Msg5) and the subsequent uplink data.

With reference to the third aspect, in a possible implementation, the second threshold is carried in a third broadcast signal, the second threshold is a threshold for signal quality corresponding to the message 3 or the message A, and the signal quality includes any one or more of the following:
a reference signal received power RSRP threshold, reference signal received quality RSRQ, a received signal strength indicator RSSI, a signal to interference plus noise ratio SINR, and a signal-to-noise ratio SNR.

**In** this implementation of this application, a possible specific implementation of the second threshold is provided. Specifically, the second threshold is carried in the third broadcast signal, and the second threshold is the threshold for the signal quality corresponding to the message 3 or the message A. It may be understood that the first broadcast signal and the third broadcast signal may be a same broadcast signal, or may be different broadcast signals. This is not limited in this application. The signal quality corresponding to the broadcast signal may include but is not limited to the reference signal received power (reference signal received power, RSRP), the reference signal received quality (reference signal received quality, RSRQ), the received signal strength indicator (received signal strength indicator, RSSI), the signal to interference plus noise ratio (signal to interference plus noise ratio, SINR), and the signal-to-noise ratio (signal-to-noise ratio, SNR). When the first broadcast signal and the third broadcast signal are a same broadcast signal, the second threshold is carried in the broadcast signal and is the threshold for the signal quality corresponding to the message 3 or the message A. Energy of the broadcast signal is compared with a value of the second threshold to measure an energy level of the broadcast signal received, to determine whether to request uplink data transmission enhancement corresponding to the terminal device, to implement transmission performance enhancement for the message 3 (Msg3) or the message A (MsgA) and the subsequent uplink data. When the first broadcast signal and the third broadcast signal are different broadcast signals, the second threshold is carried in the third broadcast signal and is the threshold for the signal quality corresponding to the message 3 or the message A. The energy of the first broadcast signal is compared with the value of the second threshold to measure the energy level of the first broadcast signal received, to determine whether to request uplink data transmission enhancement corresponding to the terminal device, to implement transmission performance enhancement for the message 3 (Msg3) or the message A (MsgA) and the subsequent uplink data.

According to a fourth aspect, an embodiment of this application provides a communication method. The method may be performed by a communication apparatus. The communication apparatus may be a device sold as a whole, or may be a chip (system) or a circuit used in a device. This is not limited in this application. The method includes:
sending a first broadcast signal.

The first broadcast signal is used together with a first threshold to determine uplink data transmission enhancement corresponding to a terminal device; or
the first broadcast signal is used together with a second threshold to determine that transmission enhancement for uplink data corresponding to the terminal device starts from a message 3 or a message A.

**In** this embodiment of this application, the communication method is provided. A network device sends the first broadcast signal, and the terminal device determines, by using energy of the first broadcast signal, uplink data transmission enhancement corresponding to the terminal device. The network device herein may alternatively be a processor/chip that may be configured to execute computer-executable instructions. This is not limited in embodiments of this application.

The first broadcast signal in this embodiment of this application may be cell-level information required in an initial access process of the terminal device, such as a synchronization signal block (synchronization signal block, SSB) or a system information block 1 (system information block 1, SIB1), and the energy of the first broadcast signal may be signal quality. When the energy of the first broadcast signal is less than the first threshold, uplink data transmission enhancement corresponding to the terminal device is determined. It may be understood that in this case, an energy level of the first broadcast signal received is measured to determine whether to request uplink data transmission enhancement corresponding to the terminal device, to implement transmission performance enhancement for a message 5 (Msg5) and subsequent uplink data. Alternatively, when the energy of the first broadcast signal is less than the second threshold, it is determined that transmission enhancement for the uplink data corresponding to the terminal device starts from the message 3 (Msg3) or the message A (MsgA). It may be understood that in this case, the energy level of the first broadcast signal received is measured to determine whether to request uplink data transmission enhancement corresponding to the terminal device, to implement transmission performance enhancement for the message 3 (Msg3) or the message A (MsgA) and subsequent uplink data.

In this embodiment of this application, the energy level of the first broadcast signal may be measured to determine that uplink data transmission enhancement corresponding to the terminal device needs to be requested, so that the network device can determine that uplink transmission performance of the terminal device needs to be enhanced. In this way, a signal path loss of a communication signal between a UE and the network device (a satellite base station) is overcome, and the uplink transmission performance is improved, so that the UE stably completes initial access.

Optionally, the first broadcast signal is further used together with the second threshold to determine that uplink transmission enhancement for the uplink data corresponding to the terminal device starts from the message 3 or the message A and uplink transmission enhancement ends upon receipt of an RRC reconfiguration message.

With reference to the fourth aspect, in a possible implementation, the first threshold is carried in a second broadcast signal, the first threshold is a threshold for signal quality corresponding to the first broadcast signal or the second broadcast signal, and the signal quality includes any one or more of the following:
a reference signal received power RSRP threshold, reference signal received quality RSRQ, a received signal strength indicator RSSI, a signal to interference plus noise ratio SINR, and a signal-to-noise ratio SNR.

In this implementation of this application, a possible specific implementation of the first threshold is provided. Specifically, the first threshold is carried in the second broadcast signal, and the first threshold is the threshold for the signal quality corresponding to the first broadcast signal or the second broadcast signal. It may be understood that the first broadcast signal and the second broadcast signal may be a same broadcast signal, or may be different broadcast signals. This is not limited in this application. The signal quality corresponding to the broadcast signal may include but is not limited to the reference signal received power (reference signal received power, RSRP), the reference signal received quality (reference signal received quality, RSRQ), the received signal strength indicator (received signal strength indicator, RSSI), the signal to interference plus noise ratio (signal to interference plus noise ratio, SINR), and the signal-to-noise ratio (signal-to-noise ratio, SNR). When the first broadcast signal and the second broadcast signal are a same broadcast signal, the first threshold is carried in the broadcast signal and is a threshold for signal quality corresponding to the broadcast signal. Energy of the broadcast signal is compared with a value of the first threshold to measure an energy level of the broadcast signal received, to determine whether to request uplink data transmission enhancement corresponding to the terminal device, to implement transmission performance enhancement for the message 5 (Msg5) and the subsequent uplink data. When the first broadcast signal and the second broadcast signal are different broadcast signals, the first threshold is carried in the second broadcast signal and is the threshold for the signal quality corresponding to the first broadcast signal or the second broadcast signal. The energy of the first broadcast signal is compared with the value of the first threshold to measure the energy level of the first broadcast signal received, to determine whether to request uplink data transmission enhancement corresponding to the terminal device, to implement transmission performance enhancement for the message 5 (Msg5) and the subsequent uplink data.

With reference to the fourth aspect, in a possible implementation, the second threshold is carried in a third broadcast signal, the second threshold is a threshold for signal quality corresponding to the message 3 or the message A, and the signal quality includes any one or more of the following:
a reference signal received power RSRP threshold, reference signal received quality RSRQ, a received signal strength indicator RSSI, a signal to interference plus noise ratio SINR, and a signal-to-noise ratio SNR.

In this implementation of this application, a possible specific implementation of the second threshold is provided. Specifically, the second threshold is carried in the third broadcast signal, and the second threshold is the threshold for the signal quality corresponding to the message 3 or the message A. It may be understood that the first broadcast signal and the third broadcast signal may be a same broadcast signal, or may be different broadcast signals. This is not limited in this application. The signal quality corresponding to the broadcast signal may include but is not limited to the reference signal received power (reference signal received power, RSRP), the reference signal received quality (reference signal received quality, RSRQ), the received signal strength indicator (received signal strength indicator, RSSI), the signal to interference plus noise ratio (signal to interference plus noise ratio, SINR), and the signal-to-noise ratio (signal-to-noise ratio, SNR). When the first broadcast signal and the third broadcast signal are a same broadcast signal, the second threshold is carried in the broadcast signal and is the threshold for the signal quality corresponding to the message 3 or the message A. Energy of the broadcast signal is compared with a value of the second threshold to measure an energy level of the broadcast signal received, to determine whether to request uplink data transmission enhancement corresponding to the terminal device, to implement transmission performance enhancement for the message 3 (Msg3) or the message A (MsgA) and the subsequent uplink data. When the first broadcast signal and the third broadcast signal are different broadcast signals, the second threshold is carried in the third broadcast signal and is the threshold for the signal quality corresponding to the message 3 or the message A. The energy of the first broadcast signal is compared with the value of the second threshold to measure the energy level of the first broadcast signal received, to determine whether to request uplink data transmission enhancement corresponding to the terminal device, to implement transmission performance enhancement for the message 3 (Msg3) or the message A (MsgA) and the subsequent uplink data.

According to a fifth aspect, an embodiment of this application provides a communication apparatus. The apparatus includes a module or a unit configured to perform the method according to any one of the first aspect and the possible implementations of the first aspect.

In a possible design, the apparatus includes:
a communication unit, configured to send first information to a network device, where the first information is used to request uplink data transmission enhancement corresponding to a terminal device, and the first information is carried in a radio resource control RRC connection setup message of the terminal device.

The communication unit is further configured to receive second information from the network device, where the second information indicates uplink data transmission enhancement corresponding to the terminal device.

In a possible implementation, the apparatus further includes:
a processing unit, configured to generate the first information.

For a method performed by the processing unit and the communication unit, refer to the method corresponding to the first aspect. Details are not described herein again.

For technical effects brought by the fifth aspect and any possible implementation, refer to the descriptions of the technical effects corresponding to the first aspect and the corresponding implementations.

According to a sixth aspect, an embodiment of this application provides a communication apparatus. The apparatus includes a module or a unit configured to perform the method according to any one of the second aspect and the possible implementations of the second aspect.

In a possible design, the apparatus includes:
a communication unit, configured to receive a first broadcast signal from a network device; and
a processing unit, configured to: when energy of the first broadcast signal is less than a first threshold, determine uplink data transmission enhancement corresponding to a terminal device.

Alternatively, the processing unit is configured to: when the energy of the first broadcast signal is less than a second threshold, determine that transmission enhancement for uplink data corresponding to the terminal device starts from a message 3 or a message A.

For a method performed by the processing unit and the communication unit, refer to the method corresponding to the second aspect. Details are not described herein again.

For technical effects brought by the sixth aspect and any possible implementation, refer to the descriptions of the technical effects corresponding to the second aspect and the corresponding implementations.

According to a seventh aspect, an embodiment of this application provides a communication apparatus. The apparatus includes a module or a unit configured to perform the method according to any one of the third aspect and the possible implementations of the third aspect.

In a possible design, the apparatus includes:
a communication unit, configured to receive first information from a terminal device, where the first information is used to request uplink data transmission enhancement corresponding to the terminal device, and the first information is carried in a radio resource control RRC connection setup request message of the terminal device.

The communication unit is further configured to send second information to the terminal device, where the second information indicates uplink data transmission enhancement corresponding to the terminal device.

In a possible implementation, the apparatus further includes:
a processing unit, configured to generate the second information.

For a method performed by the processing unit and the communication unit, refer to the method corresponding to the third aspect. Details are not described herein again.

For technical effects brought by the seventh aspect and any possible implementation, refer to the descriptions of the technical effects corresponding to the third aspect and the corresponding implementations.

According to an eighth aspect, an embodiment of this application provides a communication apparatus. The apparatus includes a module or a unit configured to perform the method according to any one of the fourth aspect and the possible implementations of the fourth aspect.

In a possible design, the apparatus includes:
a communication unit, configured to send a first broadcast signal.

The first broadcast signal is used together with a first threshold to determine uplink data transmission enhancement corresponding to a terminal device; or
the first broadcast signal is used together with a second threshold to determine that transmission enhancement for uplink data corresponding to the terminal device starts from a message 3 or a message A.

In a possible implementation, the apparatus further includes:
a processing unit, configured to generate the first broadcast signal.

For a method performed by the processing unit and the communication unit, refer to the method corresponding to the fourth aspect. Details are not described herein again.

For technical effects brought by the eighth aspect and any possible implementation, refer to the descriptions of the technical effects corresponding to the fourth aspect and the corresponding implementations.

Optionally, in the communication apparatus according to any one of the fifth aspect to the eighth aspect and any one of the possible implementations,
in an implementation, the communication apparatus is a communication device; when the communication apparatus is the communication device, the communication unit may be a transceiver or an input/output interface, and the processing unit may be at least one processor; optionally, the transceiver may be a transceiver circuit; and optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

According to a ninth aspect, an embodiment of this application provides a communication apparatus. The communication apparatus includes a processor. The processor is coupled to a memory, and may be configured to execute instructions in the memory, to implement the method according to any one of the first aspect to the fourth aspect and any one of the possible implementations. Optionally, the communication apparatus further includes the memory. Optionally, the communication apparatus further includes a communication interface, and the processor is coupled to the communication interface.

According to a tenth aspect, an embodiment of this application provides a communication apparatus, including a logic circuit and a communication interface. The communication interface is configured to receive information or send information. The logic circuit is configured to receive information or send information through the communication interface, so that the communication apparatus performs the method according to any one of the first aspect to the fourth aspect and any one of the possible implementations.

According to an eleventh aspect, an embodiment of this application provides a computer-readable storage medium. The computer-readable storage medium is configured to store a computer program (which may also be referred to as code or instructions). When the computer program is run on a computer, the method according to any one of the first aspect to the fourth aspect and any one of the possible implementations is implemented.

According to a twelfth aspect, an embodiment of this application provides a computer program product. The computer program product includes a computer program (which may also be referred to as code or instructions). When the computer program is run, a computer is enabled to perform the method according to any one of the first aspect to the fourth aspect and any one of the possible implementations.

According to a thirteenth aspect, an embodiment of this application provides a chip. The chip includes a processor. The processor is configured to execute instructions. When the processor executes the instructions, the chip is enabled to perform the method according to any one of the first aspect to the fourth aspect and any one of the possible implementations. Optionally, the chip further includes a communication interface, and the communication interface is configured to receive a signal or send a signal.

According to a fourteenth aspect, an embodiment of this application provides a communication system. The communication system includes at least one communication apparatus according to the fifth aspect, the communication apparatus according to the sixth aspect, the communication apparatus according to the seventh aspect, the communication apparatus according to the eighth aspect, the communication apparatus according to the ninth aspect, the communication apparatus according to the tenth aspect, or the chip according to the thirteenth aspect.

According to a fifteenth aspect, an embodiment of this application provides a communication system. The communication system includes a terminal device and a network device. The terminal device is configured to perform the method according to the first aspect or the second aspect and any one of the possible implementations. The network device is configured to perform the method according to the third aspect or the fourth aspect and any one of the possible implementations.

In addition, in a process of performing the method according to any one of the first aspect to the fourth aspect and any one of the possible implementations, a process related to sending information, receiving information, and/or the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further needs to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as outputting, receiving, and inputting of the processor, unless otherwise specified, or provided that the operations do not contradict actual functions or internal logic of the operations in related descriptions.

Optionally, in a process of performing the method according to any one of the first aspect to the fourth aspect and any one of the possible implementations, the processor may be a processor specially configured to perform the method, or may be a processor that performs the method by executing computer instructions in a memory, for example, a general-purpose processor. The memory may be a non-transitory (non-transitory) memory, for example, a read-only memory (Read-Only Memory, ROM). The memory and the processor may be integrated on a same chip, or may be disposed on different chips. A type of the memory and a manner in which the memory and the processor are disposed are not limited in embodiments of this application.

In a possible implementation, the at least one memory is located outside an apparatus.

In still another possible implementation, the at least one memory is located in an apparatus.

In still another possible implementation, some memories in the at least one memory are located in an apparatus, and the other memories are located outside the apparatus.

In this application, the processor and the memory may alternatively be integrated into one device. In other words, the processor and the memory may alternatively be integrated together.

In embodiments of this application, the information for requesting uplink data transmission enhancement corresponding to the terminal device is carried in the RRC connection setup message, so that the network device can determine that the uplink transmission performance of the terminal device needs to be enhanced. In this way, the signal path loss of the communication signal between the terminal device and the network device is overcome, and the uplink transmission performance is improved, so that the terminal device stably completes initial access.

### BRIEF DESCRIPTION OF DRAWINGS

To describe the technical solutions in embodiments of this application more clearly, the following briefly describes the accompanying drawings used in embodiments of this application. It is clear that, the accompanying drawings described below show merely some embodiments of this application, and a person of ordinary skill in the art may still derive other drawings from these accompanying drawings without creative efforts.
FIG. 1A is a diagram of an architecture of a communication system according to an embodiment of this application;
FIG. 1B is a diagram of an architecture of a communication system according to an embodiment of this application;
FIG. 1C is a diagram of an architecture of a communication system according to an embodiment of this application;
FIG. 2A is a diagram of an architecture of a communication system according to an embodiment of this application;
FIG. 2B is a diagram of an architecture of a communication system according to an embodiment of this application;
FIG. 3A is a schematic flowchart of random access according to an embodiment of this application;
FIG. 3B is a schematic flowchart of random access according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a diagram of resolving an occasion conflict according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

Terms "first", "second", and the like in the specification, claims, and accompanying drawings of this application are used to distinguish between different objects, but are not used to describe a specific sequence. In addition, terms such as "include" and "have" and any variants thereof are intended to cover a non-exclusive inclusion. For example, a process, method, system, product, device, or the like that includes a series of steps or units is not limited to the listed steps or units, but instead, optionally further includes a step, a unit, or the like that is not listed, or optionally further includes another step or unit inherent to the process, method, product, device, or the like.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that in embodiments of this application, unless otherwise specified or a logical conflict occurs, terms and/or descriptions in embodiments are consistent and may be mutually referenced, and technical features in different embodiments may be combined a new embodiment based on an internal logical relationship thereof.

It should be understood that in this application, "at least one (item)" means one or more, "a plurality of" means two or more, "at least two (items)" means two, three, or more, and "and/or" is used to describe an association relationship between associated objects and indicates that there may be three relationships. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including a single item (piece) or any combination of a plurality of items (pieces). For example, at least one item (piece) of a, b, or c may indicate a, b, c, "a and b", "a and c", "b and c", or "a, b, and c", where a, b, and c may be singular or plural.

It should be noted that in this application, "indication" may include a direct indication, an indirect indication, an explicit indication, and an implicit indication. When a piece of indication information indicates A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to: a manner in which the to-be-indicated information, for example, the to-be-indicated information or an index of the to-be-indicated information, may be directly indicated; a manner in which the to-be-indicated information may be indirectly indicated by indicating other information, where there is an association relationship between the other information and the to-be-indicated information; or a manner in which only one part of the to-be-indicated information may be indicated, and the other part of the to-be-indicated information is known or pre-agreed upon. For example, specific information may alternatively be indicated by an arrangement sequence of a plurality of pieces of information that is pre-agreed upon (for example, stipulated in a protocol), to reduce indication overheads to some extent. The to-be-indicated information may be sent as a whole, or may be divided into a plurality of pieces of sub-information for separate sending. In addition, sending cycles and/or sending occasions of these pieces of sub-information may be the same or different. A specific sending method is not limited in this application. The sending cycles and/or the sending occasions of these pieces of sub-information may be predefined, for example, predefined according to the protocol, or may be configured by a transmitting end device by sending configuration information to a receiving end device.

It should be noted that in this application, "sending" may be understood as "outputting", and "receiving" may be understood as "inputting". In "sending information to A", "to A" indicates only a direction of information transmission, A is a destination, and "sending information to A" is not necessarily directly performed over an air interface. "Sending information to A" includes directly sending the information to A, or includes indirectly sending the information to A through a transmitter. Therefore, "sending information to A" can also be understood as "outputting information destined for A". Likewise, "receiving information from A" indicates that a source of the information is A, and includes directly receiving the information from A, or includes indirectly receiving the information from A through a receiver. Therefore, "receiving information from A" can also be understood as "inputting information from A".

This application provides a communication method, applied to the field of communication technologies. Optionally, the method may be applied to random access in an NTN communication scenario. To describe the solutions of this application more clearly, the following first describes some knowledge related to random access in NTN communication.

With development of information technologies, modern communication systems impose more urgent requirements on communication efficiency, mobility, diversity, and the like. Currently, in some important application scenarios, for example, in the fields of space communication, aviation communication, maritime communication, military communication, and the like, NTN communication, represented by non-terrestrial devices such as satellites, uncrewed aerial vehicles, and high-altitude platforms, plays an irreplaceable role.

For ease of description, the following uses a non-terrestrial device represented by a satellite as an example for description.

Satellite communication features a long communication distance, a large coverage area, flexible networking, and the like. The satellite can provide communication services for both fixed terminals and various mobile terminals. A conventional terrestrial network cannot provide seamless coverage for terminal devices, especially in places in which a base station cannot be deployed, such as in seas, in deserts, or in the air. Therefore, an NTN is introduced into a 5th generation (the 5th generation, 5G) mobile communication system, and the NTN provides seamless coverage communication for terminal devices by deploying a base station or a part of functions of a base station on a high-altitude platform or a satellite. In addition, the high-altitude platform or the satellite is less subject to natural disasters, so that reliability of the 5G system can be improved. In the NTN deployed based on the satellite, the satellite covers the ground by using different beams, to form a satellite cell, and a terminal device may be covered by a plurality of satellite cells at a same moment.

Satellite communication systems may be classified into the following three types based on orbital heights of the satellites:
a geostationary earth orbit (geostationary earth orbit, GEO) satellite communication system, also referred to as a synchronous orbit satellite system, a medium earth orbit (medium earth orbit, MEO) satellite communication system, and a low earth orbit (low earth orbit, LEO) satellite communication system.

A GEO satellite has an orbital height of 35786 km. A main advantage is that the GEO satellite can remain stationary relative to the ground and provide a large coverage area. Disadvantages are as follows: (1) An orbit of the GEO satellite is far away from the earth, and a free space propagation loss is large. As a result, a communication link budget is tight. To increase a transmit/receive gain, an antenna with a large diameter needs to be configured for the satellite. (2) A communication transmission delay is long, and round trip time may reach about 500 ms. This cannot meet requirements of real-time services. (3) The GEO has limited orbit resources and high transmission costs, and cannot provide coverage for polar regions of the earth.

A MEO satellite has an orbital height of 2000 km to 35786 km. An advantage is that global coverage can be implemented by using a smaller number of satellites. However, the MEO satellite has a larger orbital height than the LEO, and a transmission delay is still longer than that of LEO satellite communication. Based on the advantage and the disadvantage of MEO satellite communication, the MEO satellite is mainly used for positioning and navigation.

An LEO satellite has an orbital height of 300 km to 2000 km. The LEO satellite has a smaller orbital height than the MEO and the GEO, and has advantages of a short data transmission delay, a small transmission loss, and low transmission costs. To improve an overall signal processing capability and communication throughput of a satellite network, a satellite operator increases a number of satellites to make up for a limitation of a single satellite in a communication capability. In a future NTN communication system, after a terminal device accesses the system, within a period of time, a plurality of satellites that can communicate with the terminal device and the terminal device are "visible" to each other. In this case, all the plurality of satellites may provide a communication service for the terminal device. This provides a basic condition for multi-satellite coordinated transmission.

The technical solutions provided in embodiments of this application may be applied to various communication systems, for example, a satellite communication system, and a system in which satellite communication and a cellular network are converged. A cellular network system may include but is not limited to a 5G system, a long term evolution (long term evolution, LTE) system, an LTE frequency division duplex (frequency division duplex, FDD) system, an LTE time division duplex (time division duplex, TDD) system, an advanced long term evolution (advanced long term evolution, LTE-A) system, a new radio (new radio, NR) system, an NR-based evolved system, an LTE system on an unlicensed frequency band (LTE-based access to unlicensed spectrum, LTE-U), an NR system on an unlicensed frequency band (NR-based access to unlicensed spectrum, NR-U), a wireless local area network (wireless local area network, WLAN), wireless fidelity (wireless fidelity, Wi-Fi), a next generation communication system, or another communication system. Usually, a conventional communication system supports a finite number of connections and is easy to implement. However, with development of communication technologies, a mobile communication system not only supports conventional communication, but also supports, for example, device-to-device (device-to-device, D2D) communication, machine-to-machine (machine-to-machine, M2M) communication, machine type communication (machine type communication, MTC), vehicle-to-vehicle (vehicle-to-vehicle, V2V) communication, and other future evolved communication systems. Embodiments of this application may also be applied to these communication systems. The satellite communication system may include various non-terrestrial network systems, for example, networks in which radio frequency transmission is performed by a satellite, an unmanned aircraft system (unmanned aircraft system, UAS) platform, or the like. This is not listed one by one herein.

For example, the following uses an NTN system as an example to provide a specific application scenario of this solution. The NTN system may be specifically a satellite communication system or another non-terrestrial network system. The communication method in this solution may be applied to a satellite communication scope.

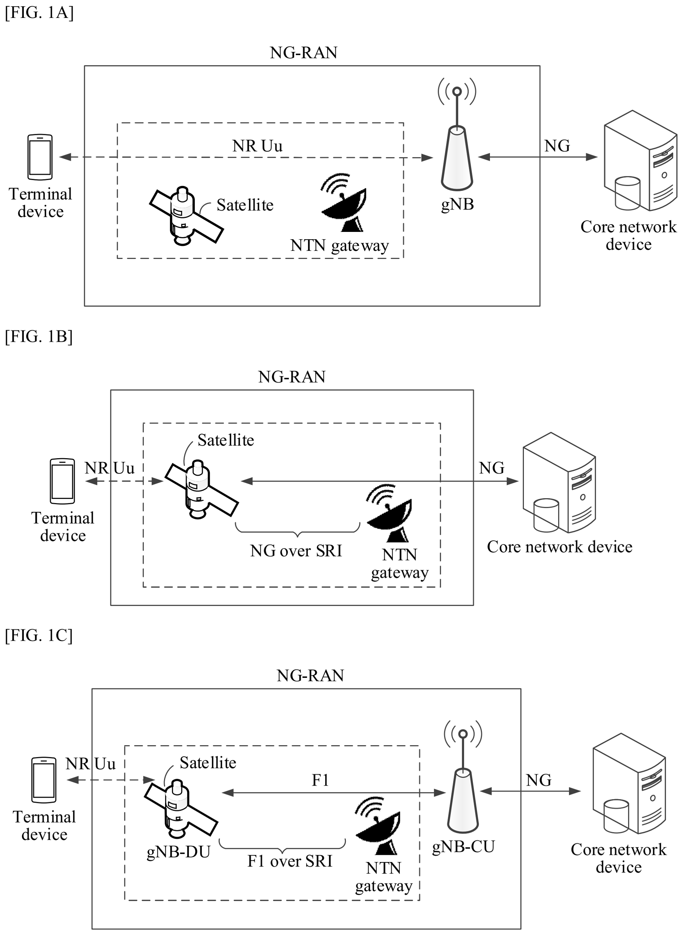

Refer to FIG. 1A, FIG. 1B, and FIG. 1C. A 5G communication system is used as an example. FIG. 1A, FIG. 1B, and FIG. 1C are diagrams of architectures of several communication systems according to embodiments of this application.

As shown in FIG. 1A, FIG. 1B, and FIG. 1C, there may be one or more terminal devices (for example, mobile terminals) and/or network devices (for example, 5G base stations) in a coverage region of a cell of a satellite. The coverage region of the cell may be a region covered by one or more beams of the satellite, or a region at a same level as a cell in an NR system.

FIG. 1A shows an example of a RAN architecture based on a transparent transmission satellite. A terrestrial base station (for example, a terrestrial gNB) is used as an access network device. The satellite is configured to implement relay transparent transmission of a signal. An NTN gateway is configured to forward a signal from the satellite or a signal from the access network device. The NTN gateway is located on the ground. In this network structure, a terminal device sends an NR Uu radio interface signal to the access network device through relay transparent transmission by the satellite and forwarding by the NTN gateway. After receiving the signal, the terrestrial access network device communicates with a terrestrial core network device according to a terrestrial communication network technology in the conventional technology. Similarly, when the core network device sends a signal to the terminal device, the terrestrial base station (for example, the terrestrial gNB) is also used as an access network device, and the satellite is also used to implement relay transparent transmission of the signal. Details are similar to the foregoing process and are not described herein again. In this example, the terrestrial base station, the satellite, and the NTN gateway form an NTN access network device.

FIG. 1B shows an example of a RAN architecture based on a regenerative satellite (regenerative satellite). The satellite serves as an access network device, or the satellite has a function of an access network device. In this network structure, a terrestrial terminal device sends a Uu radio interface signal to the access network device (that is, the satellite) through a service link (service link) between the terrestrial terminal device and the satellite. The satellite, as the access network device, receives the Uu radio interface signal from the terminal device, and parses the received signal. The satellite, as the access network device, exchanges information with a terrestrial NTN gateway through a feeder link (feeder link). For example, the satellite exchanges NG interface information with a terrestrial core network device. The satellite generates NG interface information, and sends the NG interface information to the core network through the terrestrial NTN gateway. Similarly, the core network device generates NG interface information, and sends the NG interface information to the satellite through the terrestrial NTN gateway. In this example, the satellite generates the following signals: a signal of a Uu radio interface and a signal of a satellite radio interface (satellite radio interface, SRI) on the feeder link between the NTN gateway and the satellite. In this example, optionally, the satellite and the NTN gateway form an NTN access network device. In this RAN architecture based on the regenerative satellite, there may be an Xn interface between access network devices, and the Xn interface is responsible for signaling and data exchange between the access network devices.

FIG. 1C shows another example of a RAN architecture based on a regenerative satellite (regenerative satellite). The satellite is used as a distributed unit (distributed unit, DU) of an access network device, and a terrestrial base station (for example, a gNB-CU) is used as a central unit (central unit, CU) of the access network device. In this network structure, a terrestrial terminal device sends a Uu radio interface signal to the DU (that is, the satellite) of the access network device through a service link (service link) between the terrestrial terminal device and the satellite. The DU (that is, the satellite) of the access network device receives and parses the NR-Uu radio interface signal from the terminal device. For example, the DU of the access network device generates F1 information, and the DU of the access network device sends the F1 interface information to the CU of the access network device through a feeder link and an NTN gateway. The CU of the access network device generates F1 interface information, and the CU of the access network device sends the F1 interface information to the DU of the access network device through the NTN gateway and the feeder link. The CU of the terrestrial access network device communicates with a terrestrial core network device according to a terrestrial communication network technology in the conventional technology. In this example, the satellite generates the following signals: a signal of a Uu radio interface and a signal of a satellite radio interface on the feeder link between the NTN gateway and the satellite. The feeder link transmits the F1 interface information. In this example, the terrestrial base station, the satellite, and the NTN gateway form an NTN access network device.

It may be understood that in actual deployment, the satellite in the foregoing system may alternatively be another NTN device, for example, a high-altitude platform station (high-altitude platform station, HAPS). This is not limited in this application.

Network elements in the scenario and their interfaces are described as follows.

Terminal device: is a mobile device supporting 5G new radio, typically, for example, a user terminal or a wearable device, and may access a satellite network through an air interface and initiate a service such as a call or internet access.

5G base station: mainly provides a wireless access service, schedules a wireless resource to an access terminal, and provides a reliable wireless transmission protocol, data encryption protocol, and the like.

5G core network: provides services such as user access control, mobility management, session management, user security authentication, and charging. The core network device includes a plurality of functional units, and may be divided into a control plane functional entity and a data plane functional entity. An access and mobility management function (access and mobility management function, AMF) unit is responsible for user access management, security authentication, and mobility management. A location management function (location management function, LMF) unit is responsible for managing and controlling a location service request of a target terminal, and processing location-related information. A user plane function (user plane function, UPF) unit is responsible for managing user plane data transmission, traffic statistics collection, and the like.

Terrestrial station: is responsible for forwarding signaling and service data between a satellite base station and the 5G core network.

5G new radio: is a radio link between a user equipment and a base station.

Xn interface: is an interface between 5G base stations and is mainly configured for signaling exchange such as switching.

NG interface: is an interface between the 5G base station and the 5G core network, and is mainly for exchanging non-access stratum (non-access stratum, NAS) and other signaling of a core network and service data of a user.

The technical solutions provided in this application mainly relate to two execution bodies: a network device and a terminal device, and may be applied to a communication system such as 5G, and in particular, to a communication process of a non-terrestrial network.

The terminal device in embodiments of this application includes but is not limited to an apparatus configured to receive/send a communication signal through a wired connection, for example, through a public switched telephone network (public switched telephone network, PSTN), a digital subscriber line (digital subscriber line, DSL), a digital cable, or a direct cable connection; and/or through another data connection network; and/or through a wireless interface, for example, through a cellular network, a wireless local area network (wireless local area network, WLAN), a digital television network such as a digital video broadcast-handheld (digital video broadcast-handheld, DVB-H) network, a satellite network, an amplitude modulation-frequency modulation (amplitude modulation-frequency modulation, AM-FM) broadcast transmitter; and/or through another terminal device; and/or an internet of things (internet of things, IoT) device. A terminal device configured to perform communication through a wireless interface may be referred to as a "wireless communication terminal", a "wireless terminal", or a "mobile terminal". Examples of the terminal device include but are not limited to a satellite phone or a cellular phone; a personal communication system (personal communication system, PCS) terminal that may combine a cellular radio phone with data processing, faxing, and data communication capabilities; a personal digital assistant (personal digital assistant, PDA) that may include a radio phone, a pager, internet/intranet access, a Web browser, a notepad, a calendar, and/or a global positioning system (global positioning system, GPS) receiver; and a conventional laptop and/or palmtop receiver or another electronic apparatus including a radio phone transceiver. The terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a PDA, a handheld device with a wireless communication function, a computing device or another processing device connected to a wireless modem, a vehicle-mounted device, a wearable device, a terminal device in a 5G network, a terminal device in a future evolved public land mobile communication network (public land mobile network, PLMN), or the like.

The network device in embodiments of this application may provide communication coverage in a specific geographical region, may communicate with one or more terminal devices located in the coverage region, and may be configured for communication with one or more base stations with a part of terminal functions (for example, communication between a macro base station and a micro base station such as an access point). Optionally, the network device may be a base station (base transceiver station, BTS) in a satellite, an evolved base station (evolved NodeB, eNB) in an LTE system, a next generation node base station (next generation node base station, gNB) in a 5G system or an NR system, another satellite base station, and a satellite relay node. Alternatively, the network device may be an access point (access point, AP), a transmission node (transport point, TRP), a central unit (central unit, CU), or another network entity, and may include a part or all of functions of the foregoing network entities.

It may be understood that a device with a communication function in a network/system in embodiments of this application may be referred to as a communication device. The communication systems shown in FIG. 1A, FIG. 1B, and FIG. 1C are used as examples. The communication device may include a network device and a terminal device that have a communication function. The network device and the terminal device may be specific devices described above, and details are not described herein again. The communication device may further include another device in the communication systems, for example, a network controller, a mobility management entity, or other network entities. This is not limited in embodiments of this application.

It should be further noted that in this application, the descriptions "satellite" and "satellite network device" are equivalent. That is, a satellite mentioned in this application represents a set of a satellite and another network device that are related to satellite communication.

It may be understood that a cell in the NTN system may be a projection region of a beam of the satellite on the ground, may be projection regions of a plurality of beams of the satellite on the ground, or may be a part of a projection region of one or more beams on the ground. This is not limited in embodiments of this application.

For example, the following uses a D2D communication system, an M2M communication system, or a V2X communication system as an example to provide a specific application scenario of this solution. The communication method in this solution may be applied to the foregoing communication scope.

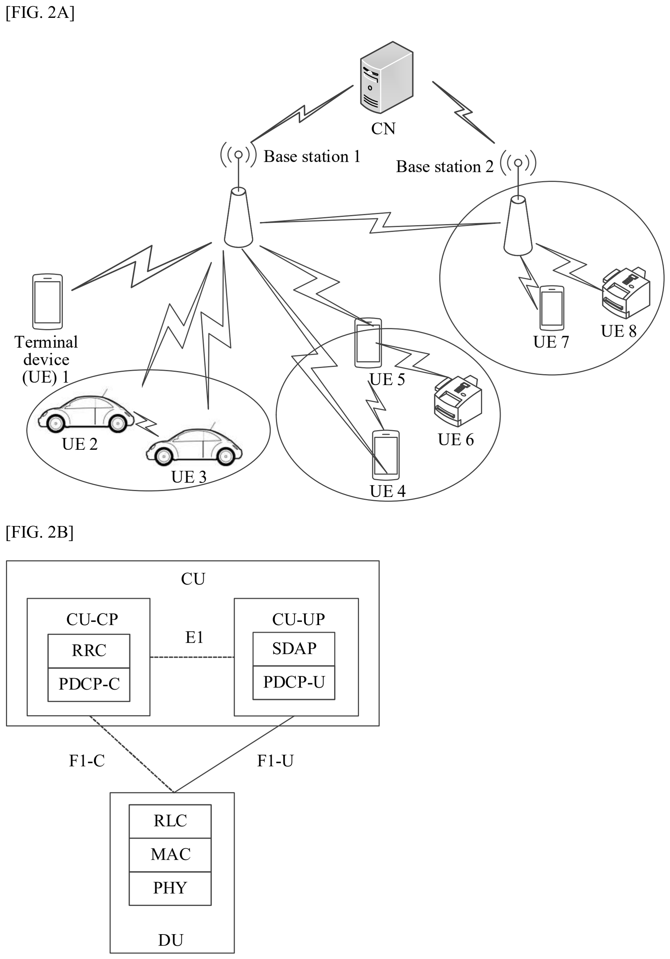

FIG. 2A is a diagram of an architecture of a communication system according to an embodiment of this application.

As shown in FIG. 2A, the communication system includes one core network device, two base stations, and eight UEs, for example, a core network device (CN), a base station 1, a base station 2, and a UE 1 to a UE 8 in FIG. 2A. In the communication system, the base station 1 may send a downlink signal like configuration information or downlink control information (downlink control information, DCI) to the UE 1 to the UE 6, and the UE 1 to the UE 6 may send an uplink signal like an SRS or a physical uplink shared channel (physical uplink shared channel, PUSCH) to the base station 1. The base station 1 may further send a downlink signal to the UE 7 and the UE 8 through the base station 2, and the UE 7 and the UE 8 may send an uplink signal to the base station 1 through the base station 2. The base station 2 may send a downlink signal like configuration information or DCI to the UE 7 and the UE 8, and the UE 7 and the UE 8 may send an uplink signal like an SRS or a PUSCH to the base station 2. It may be understood that for a communication mode between the UEs, refer to the related descriptions in FIG. 1A, FIG. 1B, and FIG. 1C. Details are not described herein again.

It should be understood that FIG. 2A shows two base stations, eight UEs, and communication links between the communication devices as an example. Alternatively, the communication system may include a plurality of base stations, and another number of UEs, for example, more or fewer UEs, may be included in a coverage area of each base station. This is not limited in this application.

A plurality of antennas may be configured for each communication device, for example, the core network device, the base station 1, the base station 2, and the UE 1 to the UE 8 in FIG. 2A. The plurality of antennas may include at least one transmit antenna for sending a signal, at least one receive antenna for receiving a signal, and the like. A specific structure of each communication device is not limited in embodiments of this application. Optionally, the communication system may further include other network entities, for example, a network controller and a mobility management entity. This is not limited in embodiments of this application.

It may be understood that for descriptions of a terminal device in the communication system, refer to the descriptions of the terminal device in FIG. 1A, FIG. 1B, and FIG. 1C. For descriptions of an access network device and the core network device in the communication system, refer to the descriptions of the network device in FIG. 1A, FIG. 1B, and FIG. 1C. Details are not described herein again.

In some deployments, the access network device may be a base station (for example, a gNB) in an architecture in which a central unit (central unit, CU) and a distributed unit (distributed unit, DU) are separated.

For details, refer to FIG. 2B. FIG. 2B is a diagram of an architecture of a communication system according to an embodiment of this application.

As shown in FIG. 2B, the CU and the DU may be understood as division of the base station from a perspective of logical functions. The CU and the DU may be physically separated or deployed together. A plurality of DUs may share one CU. Alternatively, one DU may be connected to a plurality of CUs (not shown in the figure). The CU and the DU may be connected through an interface, for example, an F1 interface. The CU and the DU may be obtained through division based on protocol layers of a wireless network. For example, functions of a radio resource control (radio resource control, RRC) layer, a service data adaptation protocol (service data adaptation protocol, SDAP) layer, and a packet data convergence protocol (packet data convergence protocol, PDCP) layer are deployed on the CU, and functions of a radio link control (radio link control, RLC) layer, a media access control (media access control, MAC) layer, and a physical (physical, PHY) layer are deployed on the DU. It may be understood that division of processing functions of the CU and the DU based on the protocol layers is merely an example, and the processing functions of the CU and the DU may alternatively be obtained through division in another manner. For example, the CU or the DU may have functions of more protocol layers through division. For example, the CU or the DU may alternatively have a part of processing functions of the protocol layers through division. In a design, a part of functions of the RLC layer and functions of a protocol layer above the RLC layer are set on the CU, and remaining functions of the RLC layer and functions of a protocol layer below the RLC layer are set on the DU. In another design, functions of the CU or the DU may alternatively be obtained through division based on a service type or another system requirement. For example, division is performed based on a delay, a function whose processing time needs to meet a delay requirement is disposed on the DU, and a function whose processing time does not need to meet the delay requirement is disposed on the CU. In another design, the CU may alternatively have one or more functions of a core network. One or more CUs may be disposed in a centralized manner or in a distributed manner. For example, the CUs may be disposed on a network side for ease of centralized management. The DU may have a plurality of radio frequency functions, or the radio frequency functions may be disposed remotely. The functions of the CU may be implemented by one entity or different entities. For example, the functions of the CU may be further divided, for example, separated into a control plane (control plane, CP) and a user plane (user plane, UP), namely, a CU control plane (CU-CP) and a CU user plane (CU-UP). For example, the CU-CP and the CU-UP may be implemented by different functional entities, and the CU-CP and the CU-UP may be coupled to the DU, to jointly implement a function of the base station. In a possible manner, the CU-CP is responsible for a control plane function, and mainly includes RRC and PDCP-C. The PDCP-C is mainly responsible for data encryption and decryption, integrity protection, data transmission, and the like on the control plane. The CU-UP is responsible for a user plane function, and mainly includes an SDAP and PDCP-U. The SDAP is mainly responsible for processing data of the core network and mapping a data flow (flow) to a bearer. The PDCP-U is mainly responsible for data plane encryption and decryption, integrity protection, header compression, sequence number maintenance, data transmission, and the like. The CU-CP and the CU-UP are connected through an El interface. The CU-CP indicates that a gNB is connected to the core network through an Ng interface, and is connected to the DU through F1-C (control plane). The CU-UP is connected to the DU through F1-U (user plane). Certainly, in another possible implementation, the PDCP-C is alternatively in the CU-UP.

It may be understood that the diagrams of the communication systems shown in FIG. 1A, FIG. 1B, FIG. 1C, FIG. 2A, and FIG. 2B are merely examples. For a diagram of a communication system in another form, refer to a related standard or protocol. Details are not described herein again.

Embodiments shown below may be applicable to the communication systems shown in FIG. 1A, FIG. 1B, FIG. 1C, FIG. 2A, and FIG. 2B, or may be applicable to the communication system in the another form. Details are not described below again.

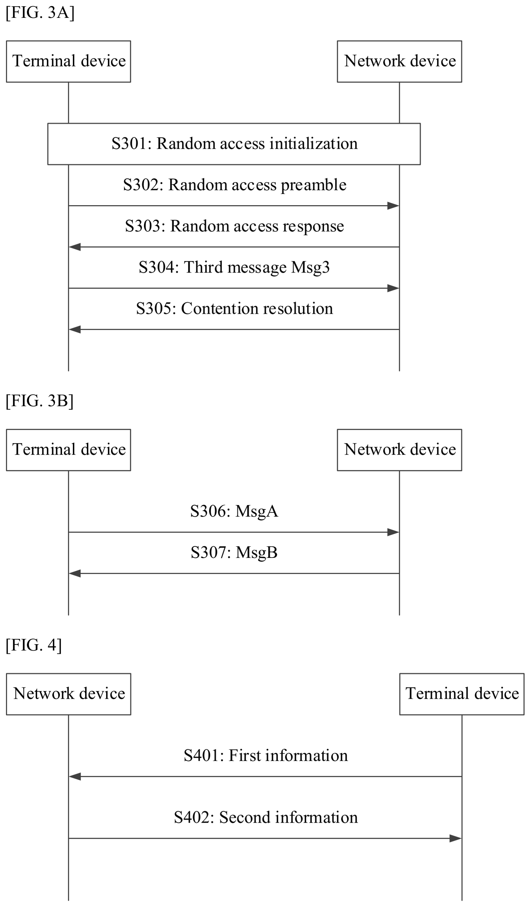

It may be understood that for details of a random access procedure in the foregoing communication scenario, refer to FIG. 3A and FIG. 3B. FIG. 3A and FIG. 3B are two schematic flowcharts of random access according to an embodiment of this application.

FIG. 3A shows contention-based four-step random access. A specific procedure is as follows.

S301: Random access initialization.

A random access procedure may be classified into two types: contention-based random access and non-contention-based random access. If a random access preamble (Preamble) is selected by MAC of a UE, the random access procedure is contention-based random access; or if a random access preamble (Preamble) is allocated by using control signaling, the random access procedure is a non-contention-based random access.

During random access initialization in a contention-based four-step random access procedure, an available physical random access channel (physical random access channel, PRACH) resource set is configured by a network side for the UE by using system information, and a PRACH resource includes a time domain resource of a PRACH and a frequency domain resource of the PRACH. The UE may randomly select a random access preamble from an available random access preamble for sending. A physical layer physical access channel index indicates a subframe corresponding to a physical random access channel (physical random access channel, PRACH) in a system frame in which the terminal device can send the preamble. The terminal device may search a correspondence table by using the physical access channel index, to determine the preamble and an available physical resource.

Parameters need to be configured for random access initialization. These parameters include: the PRACH resource set (for example, PRACH-Config index) that may be used to transmit the random access preamble; an available random access preamble group (a group A or a group B) and an available preamble set in each group; a maximum number of preamble transmissions; initial preamble transmit power; a power ramping step; a random access response window; a maximum number of hybrid automatic repeat request (hybrid automatic repeat request, HARQ) retransmissions of a third message Msg3; and a contention resolution timer.

It should be understood that before each random access procedure is triggered, all of the configured parameters may be updated through higher layer configuration. Obtaining the parameters, the terminal device performs the following operations: flushing a third message Msg3 buffer; setting a number of preamble sending times to 1; setting a backoff (backoff) parameter value stored in the terminal device to 0 ms; and entering a random access resource selection phase.

It should be further understood that the terminal device performs only one random access procedure at any moment. If the terminal device receives a newly initiated random access request in a random access procedure, whether to continue the ongoing random access procedure or start a new random access procedure is determined through implementation on a terminal device side.

S302: The terminal device sends the random access preamble to a network device. Correspondingly, the network device receives the random access preamble from the terminal device.

Specifically, the random access preamble (random access preamble, RAP) is carried in a first message Msg1. A main function of the RAP is to notify the network device that there is a random access request, and enable the network device to estimate a transmission delay between the network device and the terminal device, so that an access network device can calibrate an uplink advance and notify the terminal device of calibration information by using a timing advance command. Optionally, the first message Msg1 may also be referred to as a random access preamble.

As a new random access scenario is introduced into a 5G NR system, random access may also be used for another request of the terminal device in the new scenario. For example, the RAP may alternatively indicate to send an on-demand system information request, or indicate to send a beam failure recovery request. This is not limited in this application. For example, there may be a correspondence between the RAP and one or more on-demand system information requests, or there may be a correspondence between the RAP and one or more beam failure recovery requests. The terminal device may preconfigure the RAP, or receive the RAP configured by the access network device.

S303: The network device sends a random access response to the terminal device. Correspondingly, the terminal device receives the random access response from the network device.

Specifically, the terminal device may monitor a PDCCH by using a random access radio network temporary identifier (random access radio network temporary identifier, RA-RNTI). If receiving scheduling information, that is, downlink control information (downlink control information, DCI) for the terminal device, the terminal device receives, on a physical downlink shared channel (physical downlink shared channel, PDSCH) based on the DCI, a random access response (random access response, RAR) message delivered by the network device. The DCI includes related content such as resource block (resource block, RB) allocation information and a modulation and coding scheme (modulation and coding scheme, MCS).

Specifically, the random access response is carried in a second message Msg2. After sending the preamble, the terminal device monitors the corresponding PDCCH within a RAR window based on an RA-RNTI value corresponding to the preamble. If a preamble carried in the response received by the terminal device is consistent with the preamble sent in the Msg1, the terminal device stops monitoring the RAR. Specifically, the network device may send the RAR to the terminal device by using the PDSCH.

The RAR includes an uplink timing advance, an uplink grant (UL grant) allocated to the third message Msg3, a temporary cell radio network temporary identifier (cell radio network temporary identifier, temporary C-RNTI, TC-RNTI for short) allocated by the network side, and the like. The PDCCH that carries a second message Msg2 scheduling message is scrambled by using the RA-RNTI.

It should be understood that if a plurality of terminal devices send RAPs on a same PRACH resource (at a same time-frequency position), a plurality of corresponding RARs are multiplexed in a same MAC protocol data unit (protocol data unit, PDU).

S304: The terminal device sends the third message Msg3 to the network device. Correspondingly, the network device receives the third message Msg3 sent by the terminal device.

The terminal device sends the third message Msg3 to the network device based on the uplink grant and uplink timing advance information in the second message Msg2 by using a PUSCH. It should be understood that content of the third message Msg3 may be different based on different statuses of the terminal device and different application scenarios.

Because the network device sends the MAC PDU to the plurality of terminal devices in step S303, the terminal devices may receive different RARs. Correspondingly, behaviors of the terminal devices may also be different. After each terminal device obtains, through monitoring, a RAR for the terminal device, the terminal device may send a third message Msg3 to the access network device based on specific content included in the RAR. The third message Msg3 may be classified into the following types: an RRC connection request, a tracking area data update, a resource scheduling request, and the like. For example, the following Table 1 provides some examples of the third message Msg3.

**Table 1**

| Random access reason | Message type | Terminal device identifier |
|---|---|---|
| Initial network access | RRC connection request | NAS terminal device ID (S-TMSI) or random number |
| RRC connection | RRC connection | C-RNTI |
| reestablishment | reestablishment request | |
| Handover | Handover message | C-RNTI |
| Downlink data arrival | C-RNTI MAC control element | C-RNTI |
| Uplink data arrival | C-RNTI MAC control element | C-RNTI |

S305: The network device sends a contention resolution, that is, a fourth message Msg4, to the terminal device. Correspondingly, the terminal device receives the contention resolution from the network device.

Contention occurs when the plurality of terminal devices use a same preamble to initiate random access. A maximum of one terminal device in terminal devices contending for a same resource can succeed in access. In this case, the network device sends a contention resolution message to the terminal device by using the PDSCH.

Specifically, after sending the third message Msg3, the terminal device starts the contention resolution timer (mac-contention resolution timer), and monitors the PDCCH by using the temporary C-RNTI indicated in the RAR or a C-RNTI preconfigured by the network device. If the terminal device receives, before the contention resolution timer expires, the contention resolution message (that is, the contention resolution) sent by the network device to the terminal device, it may be considered that the random access procedure succeeds. Before the contention resolution timer expires, the network device may indicate the terminal device to retransmit the third message Msg3. After resending the third message Msg3, the terminal device restarts the contention resolution timer.

In scenarios in which random access is due to initial access and connection reestablishment, the fourth message Msg4 carries a UE contention resolution identifier (contention resolution ID) through a MAC layer control element. The MAC CE includes a common control channel (common control channel, CCCH) service data unit (service data unit, SDU) transmitted in the third message Msg3, that is, an RRC connection request or an RRC connection reestablishment request. After receiving the MAC CE, the UE compares content of the MAC CE with content sent by the UE by using the third message Msg3. If the content of the MAC CE is the same as the content sent by the UE by using the third message Msg3, or the content of the MAC CE is partial information (optionally, the partial information includes a terminal device identifier) sent by the UE by using the third message Msg3, it is determined that the contention resolution succeeds. In the two scenarios, no C-RNTI is allocated to the UE before, and the fourth message Msg4 is scheduled by using the PDCCH scrambled by using the temporary C-RNTI (TC-RNTI). After the contention resolution succeeds, the temporary C-RNTI (TC-RNTI) is upgraded to the C-RNTI of the UE.

In other scenarios, for three scenarios of handover, uplink data arrival, and downlink data arrival, the C-RNTI has been previously allocated to the UE, and the C-RNTI is also transmitted to a base station through the MAC CE by using the third message Msg3. The base station schedules the fourth message Msg4 by using the PDCCH scrambled by using the C-RNTI. When the UE receives a scheduling command, the contention resolution is completed. Specific content of the fourth message Msg4 is irrelevant to the contention resolution (although the specific content of the fourth message Msg4 is irrelevant to the contention resolution at this point, because the fourth message Msg4 is scheduled by using the PDCCH, it may also be understood that the fourth message Msg4 has a function of the contention resolution). In the three scenarios, after the contention resolution succeeds, the temporary C-RNTI (TC-RNTI) is reclaimed, and the base station may allocate the temporary C-RNTI to another UE for use. A HARQ mechanism is also used for the fourth message Msg4, but only a UE that successfully decodes the fourth message Msg4 and successfully resolves a contention feeds back an ACK, and in other cases, no ACK is fed back.

FIG. 3B shows contention-based two-step random access. A specific procedure is as follows.

S306: A terminal device sends a MsgA to a network device. Correspondingly, the network device receives the MsgA from the terminal device.

Specifically, the MsgA includes a random access signal and payload data. The random access signal may include a preamble (preamble) and/or a demodulation reference signal (demodulation reference signal, DMRS). The random access signal is used to receive the payload data. For example, a transmission boundary (for example, a start location and an end location of a slot (slot) for transmitting the payload data) or demodulation of the payload data may be determined based on the random access signal. The payload data may be control plane data and/or user plane data. The payload data may correspond to the content included in the third message Msg3 in the foregoing four-step random access mechanism. For example, the payload data may include any one of an RRC connection request, a terminal device identifier, a scheduling request, a buffer status report (buffer status report, BSR), real service data, and the like.

Optionally, the terminal device identifier may be a C-RNTI, a serving-temporary mobile subscriber identity (serving-temporary mobile subscriber identity, s-TMSI), a terminal identifier (resume Identity) in an inactive state, or the like. A specific identifier carried depends on different random access trigger events, and is not limited. It should be noted that the terminal device identifier may be all carried in the payload data, or may be partially carried in the payload data and partially carried in the random access signal. Being carried in the random access signal may be understood as that different sequences or same sequences with different cyclic shifts represent different bit values. For example, the following Table 2 provides terminal device identifiers corresponding to different random access trigger events.

**Table 2**

| Random access trigger event | Type of a UE identifier |
|---|---|
| Initial access | NAS terminal device ID (S-TMSI) or random number |
| RRC connection reestablishment | C-RNTI |
| Handover | C-RNTI |
| Uplink/downlink data arrival or uplink out-of-synchronization | C-RNTI |
| Inactive state transition | Short I-RNTI or I-RNTI |
| Request system information | None |
| Beam failure recovery | C-RNTI |

After receiving the MsgA, the network device decodes the random access signal and the payload data, to obtain decoding states including: (1) "successfully decoded" and (2) "unsuccessfully decoded". For example, the following Table 3 provides a possible decoding result.

**Table 3**

| | Random access signal | Payload data |
|---|---|---|
| Case 1 | Unsuccessfully decoded | Unsuccessfully decoded |
| Case 2 | Unsuccessfully decoded | Successfully decoded |
| Case 3 | Successfully decoded | Unsuccessfully decoded |
| Case 4 | Successfully decoded | Successfully decoded |

Further, possible relationships between a resource on which the random access signal is located and a resource on which the payload data is located are as follows: (1) There is an overlapping region in time domain, and there is no overlapping region in frequency domain. (2) There is no overlapping region in time domain, and there may be or may not be an overlapping region in frequency domain. The resource on which the random access signal is located and the resource on which the payload data is located may be configured by the network device.

It should be understood that the third message Msg3 mentioned in this application may be the third message Msg3 in the foregoing four-step random access procedure, or may be the payload data in the MsgA in the foregoing two-step random access procedure. This is not limited in this application.

S307: The network device sends a MsgB to the terminal device. Correspondingly, the terminal device receives the MsgB from the network device.

Specifically, the MsgB is used to carry a response message for the random access signal and the payload data. The response message may include at least one of the following: information about the temporary C-RNTI, information about a timing advance command (TA command), information about an uplink grant, information about a contention resolution identifier (contention resolution ID), and the like. The contention resolution identifier may be a part or all of content of the payload data.

In addition, the response message further includes a control plane message (which may also be considered as an acknowledgement that is based on scheduled transmission). For example, based on different states of the terminal device and different triggering scenarios, a RAR may further include one of the following: an RRC connection message, an RRC reestablishment message, an RRC resume message, and the like.

The response message in this application is a response message for requesting random access, and may also be referred to as a random access response (message).

In a random access procedure in the foregoing communication scenario, after the contention is resolved, the UE needs to send a fifth message Msg5 (that is, RRC setup complete, indicating that RRC setup is completed), authentication NAS signaling, UE capability reporting, security signaling, and the like for transmission.

Uplink signaling such as the Msg5 can be fragmented and retransmitted. When a link budget is inadequate for high-capacity data transmission, the Msg5 may be fragmented to reduce a number of bits carried by each fragment, and may be retransmitted to improve transmission performance. When a number of to-be-transmitted bits is greater than a number of bits that can be carried by a single slot, fragmentation is required to implement high-load transmission.

However, for direct fragmentation of a PUSCH with a heavy uplink load, a packet header load needs to be increased. As a result, more slots need to be occupied. A plurality of fragments additionally introduce packet header loads for the fragments, further increasing a transmission load. In addition, the fragmented PUSCH is transmitted through DCI scheduling. A plurality of fragmentations require a plurality of pieces of DCI signaling. In an initial access phase, one piece of DCI cannot be used to schedule a plurality of PUSCHs. Therefore, a plurality of fragmentations of the Msg5 require a plurality of pieces of DCI for scheduling. Transmission of the plurality of pieces of DCI occupies downlink resources, affecting a system capacity.

In this case, a transport block over multi-slot (transport block over multi-slot, TBoMS) technology may be used to perform uplink transmission enhancement, and one transport block (transport block, TB) can be transmitted in a plurality of slots (slots), without an introduced packet header load increased by fragmentation and without a plurality of pieces of DCI for scheduling.

However, when the Msg5 is transmitted, the UE has not reported a UE capability, and the gNB does not know a capability supported by the UE, and does not have a method for determining whether to configure TBoMS transmission. In addition, consecutive slots are used for TBoMS transmission in frequency division duplex (frequency division duplex, FDD). In a scenario in which an uplink budget is limited and an uplink channel resource is limited, there may be a conflict with an access resource for an access occasion (random access channel occasion, RO).

Particularly, in a random access procedure of a UE in an NTN communication scenario, satellite communication is used as an example. A satellite serves as a base station to configure a random access resource for the UE, to implement random access of the UE. The satellite has a high movement speed relative to the ground, and a signal propagation distance is longer. Consequently, a signal path loss is greater when the satellite serves as the base station. This constrains uplink and downlink transmission performance, leading to low initial access performance of the UE.

Therefore, to enable a satellite to serve as a base station and provide a communication service for a UE, how to overcome a signal path loss of a communication signal between the UE and the satellite base station and improve uplink transmission performance to enable the UE to stably complete initial access becomes an urgent technical problem to be resolved.

In view of this, an embodiment of this application provides a new communication method, in which information for requesting uplink data transmission enhancement corresponding to a terminal device is carried in an RRC connection setup message, so that a network device can determine that uplink transmission performance of the terminal device needs to be enhanced. In this way, a signal path loss of a communication signal between a UE and the network device (a satellite base station) is overcome, and the uplink transmission performance is improved, so that the UE stably completes initial access.

FIG. 4 is a schematic flowchart of a communication method according to an embodiment of this application. The communication method is applied to the field of communication technologies, for example, random access in an NTN communication scenario. The communication method includes but is not limited to the following steps.

S401: A terminal device sends first information to a network device. Correspondingly, the network device receives the first information from the terminal device.

S402: The network device sends second information to the terminal device. Correspondingly, the terminal device receives the second information from the network device.

It may be understood that the network device in this embodiment of this application is a device equipped with a processor/chip that may be configured to execute computer-executable instructions, or may be a processor/chip that may be configured to execute computer-executable instructions. This is not limited in embodiments of this application. Optionally, the network device may be an access network device, for example, a base station or a transmission point TRP, or may be specifically the access network device (including but not limited to any one of the base station 1 and the base station 2) in FIG. 1A, FIG. 1B, FIG. 1C, FIG. 2A, and FIG. 2B, and is configured to perform the communication method in embodiments of this application, to improve uplink transmission performance, so that a UE stably completes initial access.

It may be understood that the terminal device in this embodiment of this application is a device equipped with a processor/chip that may be configured to execute computer-executable instructions, or may be a processor/chip that may be configured to execute computer-executable instructions. This is not limited in embodiments of this application. Optionally, the terminal device may be a handheld terminal (for example, a mobile phone or a tablet computer), may be a vehicle-mounted terminal (for example, a wireless terminal in unmanned driving), or may be specifically the terminal device (including but not limited to any one of the UE 1 to the UE 8) in FIG. 1A, FIG. 1B, FIG. 1C, and FIG. 2A, and is configured to perform the communication method in embodiments of this application, to improve the uplink transmission performance, so that the UE stably completes initial access.

The first information is used to request uplink data transmission enhancement corresponding to the terminal device.

Optionally, the first information is carried in a radio resource control (radio resource control, RRC) connection setup message of the terminal device.

It may be understood that the first information is specifically used to request how to perform uplink data transmission enhancement. This is not limited in embodiments of this application. For example, the first information may be used to request to transmit, by using a transport block over multi-slot (transport block over multi-slot, TBoMS) technology, one transport block (transport block, TB) of uplink data corresponding to the terminal device in a plurality of slots, with repeated transmission supported, may be used to request to repeatedly send one TB of the uplink data corresponding to the terminal device in a plurality of slots, or may be used to request to scale a data amount (Ninfo) by using a transport block scaling (TB scaling) factor and equivalently further reduce a code rate through rate matching after encoding, to enhance the uplink data transmission performance.

The second information indicates uplink data transmission enhancement corresponding to the terminal device.

It may be understood that the second information specifically indicates how to perform uplink data transmission enhancement. This is not limited in embodiments of this application. For example, when the first information is used to request to perform uplink data transmission enhancement in a specific manner (for example, by using the TBoMS technology), the second information indicates to perform uplink data transmission enhancement in the manner requested by using the first information. When the first information only requests to perform uplink data transmission enhancement, but does not request to perform uplink data transmission enhancement in a specific manner, the second information indicates that a manner of performing uplink data transmission enhancement may be determined by the network device.

Optionally, when the first information is specifically used to request to transmit, by using the TBoMS technology, one TB of the uplink data corresponding to the terminal device in a plurality of slots, with repeated transmission supported, to enhance uplink data transmission, the second information includes but is not limited to a number of slots occupied by a TBoMS and a number of repetitions of transmission with the TBoMS. In this case, the second information specifically indicates to transmit the uplink data corresponding to the terminal device by using the TBoMS.

Currently, in an initial access process of the terminal device, the terminal device has not reported a capability of the terminal device, and the network device does not know a capability supported by the terminal device, and cannot determine whether the uplink transmission performance of the terminal device needs to be enhanced.

In this embodiment of this application, the information for requesting uplink data transmission enhancement corresponding to the terminal device is carried in the RRC connection setup message, so that the terminal device can report the capability of the terminal device for the uplink transmission performance in the RRC connection initial access process, and the network device can learn of the uplink transmission performance of the terminal device, and determine that the uplink transmission performance of the terminal device needs to be enhanced. In this way, a signal path loss of a communication signal between the UE and the network device (a satellite base station) is overcome, and the uplink transmission performance is improved, so that the UE stably completes initial access.

It may be understood that the first information used to request uplink data transmission enhancement corresponding to the terminal device is reported to the network device in the RRC connection initial access process of the terminal device, so that the network device can learn of the uplink transmission performance of the terminal device as early as possible in the RRC connection initial access process, and further determine that the uplink transmission performance of the terminal device needs to be enhanced, enabling the UE to stably complete initial access. Specifically, the first information may be reported to the network device by using the RRC connection setup message in the RRC connection initial access process, or the first information may be reported to the network device by using another message in the RRC connection initial access process. This is not limited in embodiments of this application.

In a possible embodiment, the first information is carried in the RRC connection setup message of the terminal device, and may be specifically carried in different messages. The following provides descriptions in different cases.

### Case 1

In a four-step random access procedure of the terminal device, the first information is carried in a message 3, and the second information is carried in a message 4.

It may be understood that the message 3 in this embodiment of this application may also be referred to as a third message or a Msg3, and they have a same meaning; and the message 4 in this embodiment of this application may also be referred to as a fourth message or a Msg4, and they have a same meaning. Details are not described in the following again.

It may be understood that in Case 1, in the four-step random access procedure of the terminal device, the terminal device sends the message 3 to the network device, where the message 3 carries the first information; and correspondingly, the network device receives the message 3 from the terminal device, to obtain the first information. The network device sends the message 4 to the terminal device, where the message 4 carries the second information; and correspondingly, the terminal device receives the message 4 from the network device, to obtain the second information.

According to this embodiment of this application, in the four-step random access procedure of the terminal device, the message 3 (Msg3) is used to carry the first information for requesting uplink data transmission enhancement, so that the network device can determine that the uplink transmission performance of the terminal device needs to be enhanced; and the message 4 (Msg4) is used to carry the second information indicating uplink data transmission enhancement, so that transmission performance for a message 5 (Msg5) and subsequent uplink data can be enhanced. In this way, the signal path loss of the communication signal between the terminal device and the network device is overcome, and the uplink transmission performance is improved, so that the terminal device stably completes initial access.

### Case 2

In a two-step random access procedure of the terminal device, the first information is carried in a message A, and the second information is carried in a message B.

It may be understood that the message A in this embodiment of this application may also be referred to as a MsgA, and they have a same meaning; and the message B in this embodiment of this application may also be referred to as a MsgB, and they have a same meaning. Details are not described in the following again.

It may be understood that in Case 2, in the two-step random access procedure of the terminal device, the terminal device sends the message A to the network device, where the message A carries the first information; and correspondingly, the network device receives the message A from the terminal device, to obtain the first information. The network device sends the message B to the terminal device, where the message B carries the second information; and correspondingly, the terminal device receives the message B from the network device, to obtain the second information.

Optionally, in the two-step random access procedure, the first information (the message A) may be in a physical random access channel (physical random access channel, PRACH), that is, may be a MsgA PRACH, and may be specifically represented by adding a sequence, a bit, or the like to the PRACH. Alternatively, the first information (the message A) may be implicitly expressed by using a specific preamble (Preamble). Alternatively, the first information (the message A) may be a MsgA PUSCH.

According to this embodiment of this application, in the two-step random access procedure of the terminal device, the message A (MsgA) is used to carry the first information for requesting uplink data transmission enhancement, so that the network device can determine that the uplink transmission performance of the terminal device needs to be enhanced; and the message B (MsgB) is used to carry the second information indicating uplink data transmission enhancement, so that transmission performance for subsequent uplink data can be enhanced. In this way, the signal path loss of the communication signal between the terminal device and the network device is overcome, and the uplink transmission performance is improved, so that the terminal device stably completes initial access.

It may be understood that the foregoing case in which carrying locations/a carrying location of the first information and/or the second information is described in Case 1 or Case 2 is merely used as a possible example for description, and should not constitute a limitation on embodiments of this application. All embodiments obtained through a supplement to or a proper variation of the foregoing example case fall within the protection scope of embodiments of this application.

In a possible embodiment, how to request uplink data transmission enhancement may be specifically implemented in different manners. The following provides descriptions in different cases.

### Manner 1

The request for uplink data transmission enhancement is implemented by using the first information.

The first information includes the bit, and different values may be assigned to the bit, to indicate that uplink data transmission enhancement corresponding to the terminal device is requested or not requested.

Optionally, if a value of the bit is the first value, it indicates that uplink data transmission enhancement corresponding to the terminal device is requested.

Optionally, if the value of the bit is a second value, it indicates that uplink data transmission enhancement corresponding to the terminal device is not requested. The first value is different from the second value.

Optionally, if the value of the bit is null, it indicates that uplink data transmission enhancement corresponding to the terminal device is not requested. Alternatively, if the bit included in the first information does not exist, it may indicate that uplink data transmission enhancement corresponding to the terminal device is not requested.

For example, if the bit is set to 1 (that is, the first value is 1), it indicates that uplink data transmission enhancement corresponding to the terminal device is requested; or if the bit is set to 0 (that is, the second value is 0), it indicates that uplink data transmission enhancement corresponding to the terminal device is not requested.

It may be understood that a reserved bit in the RRC connection setup message may be reused as the bit, for example, a reserved bit in a field "ul-EnhancementReq" in the RRC connection setup message is reused, and a function of the reserved bit in indicating that uplink data transmission enhancement is requested is enabled. Alternatively, the bit may be a bit newly added in the RRC connection setup message. This is not limited in embodiments of this application.

### Manner 2

The request for uplink data transmission enhancement is implemented by using a logical channel identifier (logical channel ID, LCID) in a MAC layer data packet.

The RRC connection setup message used to carry the request for uplink data transmission enhancement is carried in the MAC layer data packet, and when a packet header of the MAC layer data packet includes the logical channel identifier corresponding to uplink data transmission enhancement corresponding to the terminal device, the logical channel identifier indicates that uplink data transmission enhancement corresponding to the terminal device is requested.

It may be understood that the foregoing manner in which the request for uplink data transmission enhancement is implemented in Manner 1 or Manner 2 is merely used as a possible example for description, and should not constitute a limitation on embodiments of this application. All embodiments obtained through a supplement to or a proper variation of the foregoing example manner fall within the protection scope of embodiments of this application.

In a possible embodiment, to resolve a problem that an uplink data transmission occasion and an access occasion of the terminal device may conflict, the terminal device and the network device further perform, but not limited to, the following steps.

The network device further sends third information to the terminal device. Correspondingly, the terminal device receives the third information from the network device.

The third information indicates that in a case of time division multiplexing transmission, a slot occupied by uplink data transmission corresponding to the terminal device is different from a slot occupied by transmission of a message 1 in the four-step random access procedure corresponding to the terminal device, or the slot occupied by uplink data transmission corresponding to the terminal device is different from a slot occupied by transmission of the message A in the two-step random access procedure corresponding to the terminal device.

It may be understood that the third information indicates that in the case of time division multiplexing transmission, the slot occupied by uplink data transmission is different from the slot occupied by transmission of the message 1 (Msg1) in the four-step random access procedure, to avoid the conflict between the uplink data transmission occasion and the access occasion. Alternatively, the third information indicates that in the case of time division multiplexing transmission, the slot occupied by uplink data transmission is different from the slot occupied by transmission of the message A (MsgA) in the two-step random access procedure, to avoid the conflict between the uplink data transmission occasion and the access occasion.

Currently, in the initial access process of the terminal device, consecutive slots are used for uplink data transmission. In a scenario in which an uplink budget is limited and an uplink channel resource is limited, a transmission resource for the uplink data may conflict with an access resource for the access occasion, causing low initial access performance of the UE.

In this embodiment of this application, with the indication of the third information, the slot occupied by uplink data transmission avoids a slot occupied by the access occasion, to avoid a conflict between the transmission resource for the uplink data and the access resource for the access occasion. This improves the uplink transmission performance, so that the UE stably completes initial access.

Optionally, the third information further indicates that in a case of frequency division multiplexing transmission, the slot occupied by uplink data transmission corresponding to the terminal device is consecutive uplink slots.

It may be understood that because a transmission standard used in uplink data transmission and random access message transmission in an FDD spectrum is FDD frequency division multiplexing transmission, there is no problem that the uplink data transmission occasion conflicts with the access occasion. In this scenario, the slot occupied by uplink data transmission corresponding to the terminal device may be consecutive uplink slots, and the slot occupied by uplink data transmission may be different from or the same as the slot occupied by the access occasion. This may be specifically determined based on a requirement of the network device.

In a possible embodiment, to enable the terminal device to accurately determine whether uplink data transmission enhancement needs to be requested, the terminal device and the network device further perform, but not limited to, the following steps.

The network device further sends a first broadcast signal. Correspondingly, the terminal device receives the first broadcast signal from the network device.

It may be understood that the terminal device determines, based on energy of the first broadcast signal, uplink data transmission enhancement corresponding to the terminal device. The first broadcast signal may be cell-level information required in the initial access process of the terminal device, such as a synchronization signal block (synchronization signal block, SSB) or a system information block 1 (system information block 1, SIB1). The energy of the first broadcast signal may be signal quality. The signal quality may include but is not limited to reference signal received power (reference signal received power, RSRP), reference signal received quality (reference signal received quality, RSRQ), a received signal strength indicator (received signal strength indicator, RSSI), a signal to interference plus noise ratio (signal to interference plus noise ratio, SINR), and a signal-to-noise ratio (signal-to-noise ratio, SNR).

It may be understood that generally, a difference between uplink and downlink in a frequency division duplex (frequency division duplex, FDD) scenario mainly lies in small-scale fading of a channel. Because an NTN channel is dominated by a line of sight (line of sight, LOS) path, many statistical characteristics in the uplink and the downlink such as a transmission distance and an angle are basically the same. It can be considered that large-scale fading in the uplink and the downlink shows little difference, and path losses and the like in the uplink and the downlink may be referenced mutually. Therefore, whether PUSCH uplink enhancement needs to be performed may be determined based on RSRP of a downlink signal.

Specifically, for an energy level of the first broadcast signal, manners of determining uplink data transmission enhancement corresponding to the terminal device are different. The following provides descriptions in different cases.

### Case 1

When the energy of the first broadcast signal is less than a first threshold, uplink data transmission enhancement corresponding to the terminal device is determined.

The first threshold is carried in a second broadcast signal, and the first threshold is a threshold for signal quality corresponding to the first broadcast signal or the second broadcast signal.

Optionally, the first threshold may be specifically carried in a field "rsrp-thresholdMsg5" in the second broadcast signal.

It may be understood that the first threshold is not a fixed value, and may be adjusted based on different application scenarios. This is not limited in embodiments of this application.

It may be understood that the second broadcast signal and the first broadcast signal may be a same broadcast signal, or may be different broadcast signals, and may be cell-level information required in the initial access process of the terminal device, such as the SSB or the SIB1. This is not limited in this application.

Optionally, when the second broadcast signal and the first broadcast signal are a same broadcast signal, the first threshold is carried in the broadcast signal and is a threshold for signal quality corresponding to the broadcast signal.

For example, both the second broadcast signal and the first broadcast signal are the SIB1, and the first threshold is carried in the SIB1 and is a threshold for signal quality corresponding to the SIB1.

Energy of the broadcast signal (the SIB1) is compared with a value of the first threshold to measure an energy level of the broadcast signal (the SIB1) received, to determine whether to request uplink data transmission enhancement corresponding to the terminal device, to implement transmission performance enhancement for a message 5 (Msg5) and subsequent uplink data in the four-step random access procedure.

Optionally, when the second broadcast signal and the first broadcast signal are different broadcast signals, the first threshold is carried in the second broadcast signal and is the threshold for the signal quality corresponding to the first broadcast signal or the second broadcast signal.

For example, the second broadcast signal is the SSB, the first broadcast signal is the SIB1, and the first threshold is carried in the SSB and is a threshold for signal quality corresponding to the SIB1 or the SSB.

Specifically, energy of the SIB1 may be detected by using a DMRS reference signal, and the energy of the first broadcast signal (the SIB1) is compared with the value of the first threshold to measure the energy level of the first broadcast signal (the SIB1) received, to determine whether to request uplink data transmission enhancement corresponding to the terminal device, to implement transmission performance enhancement for the message 5 (Msg5) and the subsequent uplink data in the four-step random access procedure.

### Case 2

When the energy of the first broadcast signal is less than a second threshold, it is determined that transmission enhancement for the uplink data corresponding to the terminal device starts from the message 3 (Msg3) or the message A (MsgA).

Optionally, when the energy of the first broadcast signal is less than the second threshold, it is further determined that uplink transmission enhancement for the uplink data corresponding to the terminal device starts from the message 3 or the message A and uplink transmission enhancement ends upon receipt of an RRC reconfiguration message.

The second threshold is carried in a third broadcast signal, and the second threshold is a threshold for signal quality corresponding to the message 3 or the message A.

Optionally, the second threshold may be specifically carried in a field "rsrp-thresholdMsg3" or "rsrp-thresholdMsgA" in the third broadcast signal.

It may be understood that the second threshold is not a fixed value, and may be adjusted based on different application scenarios. This is not limited in embodiments of this application.

It may be understood that in Case 2, it is equivalent to bind whether to perform uplink enhancement for the Msg5 with whether to perform uplink enhancement for the Msg3. When uplink enhancement needs to be performed for the Msg3, uplink enhancement needs to be performed for the Msg5; or when uplink enhancement does not need to be performed for the Msg3, uplink enhancement does not need to be performed for the Msg5.

It may be understood that the third broadcast signal and the first broadcast signal may be a same broadcast signal, or may be different broadcast signals, and may be cell-level information required in the initial access process of the terminal device, such as the SSB or the SIB1. This is not limited in this application.

Optionally, when the third broadcast signal and the first broadcast signal are a same broadcast signal, the second threshold is carried in the broadcast signal and is the threshold for the signal quality corresponding to the message 3 or the message A.

For example, both the third broadcast signal and the first broadcast signal are the SIB1, and the second threshold is carried in the SIB1 and is the threshold for the signal quality corresponding to the message 3 or the message A.

Energy of the broadcast signal (the SIB1) is compared with a value of the second threshold to measure an energy level of the broadcast signal (the SIB1) received, to determine whether to request uplink data transmission enhancement corresponding to the terminal device, to implement transmission performance enhancement for the message 3 (Msg3) or the message A (MsgA) and subsequent uplink data.

Optionally, when the third broadcast signal and the first broadcast signal are different broadcast signals, the second threshold is carried in the third broadcast signal and is the threshold for the signal quality corresponding to the message 3 or the message A.

For example, the third broadcast signal is the SSB, the first broadcast signal is the SIB1, and the second threshold is carried in the SSB and is a threshold for signal quality corresponding to the SSB.

The energy of the first broadcast signal (the SIB1) is compared with the value of the second threshold to measure the energy level of the first broadcast signal (the SIB1) received, to determine whether to request uplink data transmission enhancement corresponding to the terminal device, to implement transmission performance enhancement for the message 3 (Msg3) or the message A (MsgA) and subsequent uplink data.

In this embodiment of this application, the energy level of the first broadcast signal may be measured to determine that uplink data transmission enhancement corresponding to the terminal device needs to be requested, so that the network device can determine that the uplink transmission performance of the terminal device needs to be enhanced. In this way, the signal path loss of the communication signal between the UE and the network device (the satellite base station) is overcome, and the uplink transmission performance is improved, so that the UE stably completes initial access.

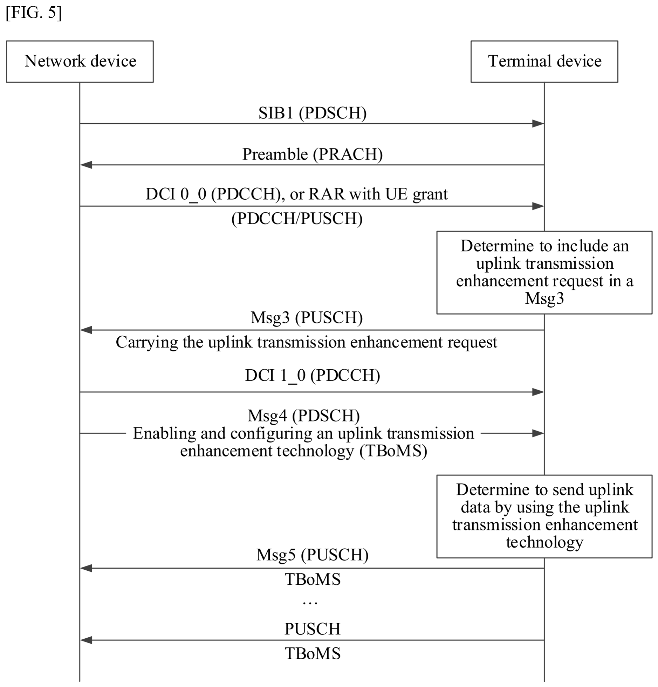

FIG. 5 is a schematic flowchart of a communication method according to an embodiment of this application. It may be understood that steps in this embodiment of this application may be considered as a proper variation of or supplement to the embodiment in FIG. 4. Alternatively, it may be understood that the communication method in this embodiment of this application may be considered as an embodiment that can be independently performed. This is not limited in this application. The communication method provided in this embodiment of this application is applied to the field of communication technologies, for example, four-step random access in an NTN communication scenario. The communication method includes but is not limited to the following steps.

A network device sends a SIB1 (carried on a PDSCH) to a terminal device. Correspondingly, the terminal device receives the SIB1 (carried on the PDSCH) from the network device.

The terminal device sends a preamble (carried on a PRACH) to the network device. Correspondingly, the network device receives the preamble (carried on the PRACH) from the terminal device.

The network device sends DCI 0_0 (carried on a PDCCH) or a RAR with UE grant (carried on a PDCCH/PUSCH) to the terminal device. Correspondingly, the terminal device receives the DCI 0_0 (carried on the PDCCH) or the RAR with UE grant (carried on the PDCCH/PUSCH) from the network device.

The terminal device determines to include an uplink transmission enhancement request in a Msg3.

The terminal device sends the Msg3 (carried on the PUSCH) to the network device, where the Msg3 carries the uplink transmission enhancement request. Correspondingly, the network device receives the Msg3 (carried on the PUSCH) from the terminal device.

The network device sends DCI 1_0 (carried on the PDCCH) to the terminal device. Correspondingly, the terminal device receives the DCI 1_0 (carried on the PDCCH) from the network device.

The network device sends a Msg4 (carried on the PDSCH) to the terminal device, to enable and configure an uplink transmission enhancement technology (TBoMS). Correspondingly, the terminal device receives the Msg4 from the network device.

The terminal device determines to send uplink data by using the uplink transmission enhancement technology.

The terminal device sends a Msg5 and the PUSCH to the network device by using a TBoMS. Correspondingly, the network device receives the Msg5 and the PUSCH from the terminal device.

It may be understood that for a specific process of the foregoing four-step random access, refer to the descriptions in FIG. 3A. Details are not described herein again.

It can be learned from FIG. 5 that in this embodiment of this application, a UE requests uplink data transmission enhancement in an initial access process by using an RRC setup request (the Msg3 in the four-step random access procedure), to implement uplink data transmission enhancement for the Msg5 and subsequent uplink signaling in the four-step random access procedure.

The UE requests uplink data transmission enhancement by using a field "ul-EnhancementRequest". A bit 1 in the field indicates that uplink data transmission enhancement is requested, and a bit 0 in the field indicates that uplink data transmission enhancement is not requested.

A network side receives the RRC setup request (the Msg3 in the four-step random access procedure), and determines, based on a field "ul-EnhancementRequest", whether to configure use of the TBoMS for the Msg5 (RRCSetupComplete, RRC setup complete) and the subsequent uplink PUSCH in the Msg4 (RRCSetup, RRC setup).

In FIG. 5, four-step random access is used as an example. The UE receives SIB1 system information sent by the network side, to obtain cell information. Based on a SIB1 configuration, the UE initiates random access on a corresponding access opportunity (RO) resource, and sends the PRACH. The network side receives the PRACH from a UE side, responds, and sends a random access response RAR.

The UE determines whether uplink enhancement needs to be performed for transmission of the Msg5 and the subsequent uplink PUSCH. If a request is required, the field "ul-EnhancementReq" in the Msg3 is set to 1, indicating that uplink data transmission enhancement for the subsequent PUSCH is requested. If no request is required, the field "ul-EnhancementReq" is set to 0, indicating that uplink data transmission enhancement for the subsequent PUSCH is not requested.

The network side receives the Msg3 sent by the UE side, parses the field in the Msg3 to determine whether the UE side requests uplink data transmission enhancement, and determines, based on a requirement, whether to configure a TBoMS technology in the Msg4. If the TBoMS technology needs to be configured in the Msg4, a number of slots occupied by a TBoMS (number Of Slots-TBoMS-r17) and a number of repetitions (number Of Repetitions) are configured in the Msg4.

The UE side performs uplink sending based on the configuration in the Msg4.

Four-step random access is used as an example. In this case, an ul-EnhancementReq-rl7 information element may be added to the Msg3. For the Msg3, this information element is originally a spare bit.

In this embodiment of this application, information for requesting uplink data transmission enhancement corresponding to the terminal device is carried in the RRC connection setup message, so that the network device can determine that uplink transmission performance of the terminal device needs to be enhanced. In this way, a signal path loss of a communication signal between the UE and the network device (a satellite base station) is overcome, and the uplink transmission performance is improved, so that the UE stably completes initial access.

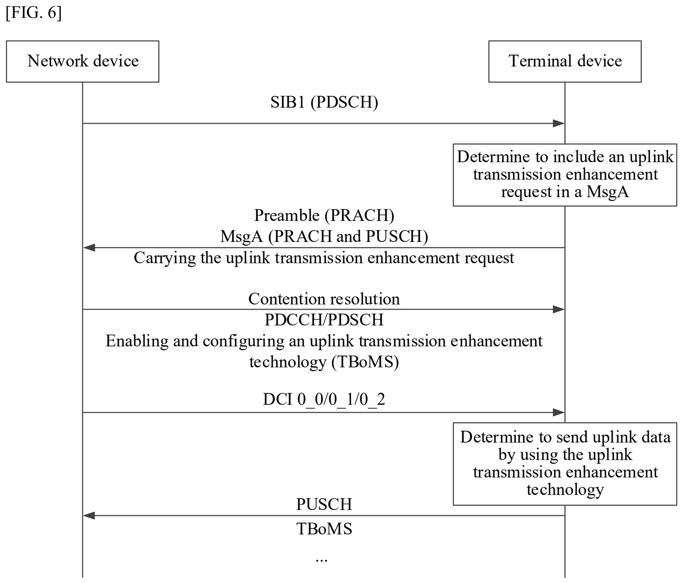

FIG. 6 is a schematic flowchart of a communication method according to an embodiment of this application. It may be understood that steps in this embodiment of this application may be considered as a proper variation of or supplement to the embodiment in FIG. 4. Alternatively, it may be understood that the communication method in this embodiment of this application may be considered as an embodiment that can be independently performed. This is not limited in this application. The communication method provided in this embodiment of this application is applied to the field of communication technologies, for example, two-step random access in an NTN communication scenario. The communication method includes but is not limited to the following steps.

A network device sends a SIB1 (a PDSCH) to a terminal device. Correspondingly, the terminal device receives the SIB1 (the PDSCH) from the network device.

The terminal device determines to include an uplink transmission enhancement request in a MsgA.

The terminal device sends a preamble (a PRACH) to the network device. Correspondingly, the network device receives the preamble (the PRACH) from the terminal device.

The terminal device sends the MsgA (the PRACH and a PUSCH) to the network device, where the MsgA carries the uplink transmission enhancement request. Correspondingly, the network device receives the MsgA (the PRACH and the PUSCH) from the terminal device.

It may be understood that in the two-step random access procedure, that the uplink transmission enhancement request is carried in the MsgA means that the uplink transmission enhancement request is included in the preamble (the PRACH) and/or the MsgA (the PRACH and the PUSCH).

The network device sends a contention resolution (a PDCCH/PDSCH) to the terminal device, to enable and configure an uplink transmission enhancement technology (TBoMS). Correspondingly, the terminal device receives the contention resolution from the network device.

The network device sends DCI 0_0/0_1/0_2 to the terminal device. Correspondingly, the terminal device receives the DCI 0_0/0_1/0_2 from the network device.

The terminal device determines to send uplink data by using the uplink transmission enhancement technology.

The terminal device sends the PUSCH to the network device by using a TBoMS. Correspondingly, the network device receives the PUSCH from the terminal device.

It may be understood that for a specific process of the foregoing two-step random access, refer to the descriptions in FIG. 3B. Details are not described herein again.

It can be learned from FIG. 6 that in this embodiment of this application, a UE requests uplink data transmission enhancement in an initial access process by using an RRC setup request (the MsgA in the two-step random access procedure), to implement uplink data transmission enhancement for subsequent uplink signaling.

In FIG. 6, two-step random access is used as an example. A network side sends system information such as a SIB1. The UE receives the system information such as the SIB1 sent by the network side, to obtain cell information. Based on a SIB1 configuration, the UE initiates random access on a corresponding access opportunity (RO) resource, and sends the PRACH. The UE determines whether uplink data transmission enhancement in the initial access process needs to be performed, and includes a request indication in the MsgA-PUSCH. Optionally, if a request is required, setting 1 indicates that uplink data transmission enhancement for the subsequent PUSCH is requested; or if no request is required, setting 0 indicates that uplink data transmission enhancement for the subsequent PUSCH is not requested. The network side receives the MsgA sent by a UE side, parses a field in the MsgA to determine whether the UE side requests uplink data transmission enhancement, and determines, based on a requirement, whether to enable and configure a TBoMS. If the TBoMS needs to be configured, configuration information of the TBoMS is carried by the downlink PDSCH. The UE side determines, based on the configuration information and a DCI indication, whether to perform uplink data transmission enhancement. If uplink data transmission enhancement needs to be performed, the UE side sends the PUSCH based on a number of repeated transmissions of the PUSCH and a number of occupied slots.

In this embodiment of this application, information for requesting uplink data transmission enhancement corresponding to the terminal device is carried in the RRC connection setup message, so that the network device can determine that uplink transmission performance of the terminal device needs to be enhanced. In this way, a signal path loss of a communication signal between the UE and the network device (a satellite base station) is overcome, and the uplink transmission performance is improved, so that the UE stably completes initial access.

In addition, this application further provides a method used by a terminal device to accurately determine whether uplink data transmission enhancement needs to be requested. It may be understood that steps in this embodiment of this application may be considered as a proper variation of or supplement to the embodiment in FIG. 4, FIG. 5, or FIG. 6. Alternatively, it may be understood that the method in this embodiment of this application may be considered as an embodiment that can be independently performed. This is not limited in this application. The method provided in this embodiment of this application is applied to the field of communication technologies, for example, random access in an NTN communication scenario. The method includes but is not limited to the following steps.

A network device sends a first broadcast signal. Correspondingly, the terminal device receives the first broadcast signal from the network device.

It may be understood that the terminal device determines, based on energy of the first broadcast signal, uplink data transmission enhancement corresponding to the terminal device. The first broadcast signal may be cell-level information required in an initial access process of the terminal device, such as a synchronization signal block (synchronization signal block, SSB) or a system information block 1 (system information block 1, SIB1). The energy of the first broadcast signal may be signal quality. The signal energy may include but is not limited to reference signal received power (reference signal received power, RSRP), reference signal received quality (reference signal received quality, RSRQ), a received signal strength indicator (received signal strength indicator, RSSI), a signal to interference plus noise ratio (signal to interference plus noise ratio, SINR), and a signal-to-noise ratio (signal-to-noise ratio, SNR).

Specifically, when the energy of the first broadcast signal is less than a first threshold, uplink data transmission enhancement corresponding to the terminal device is determined.

Alternatively, when the energy of the first broadcast signal is less than a second threshold, it is determined that transmission enhancement for uplink data corresponding to the terminal device starts from a message 3 (Msg3) or a message A (MsgA).

The first threshold is carried in a second broadcast signal, and the first threshold is a threshold for signal quality corresponding to the first broadcast signal or the second broadcast signal.

Optionally, the first threshold may be specifically carried in a field "rsrp-thresholdMsg5", for example, BWP-UplinkCommon, in the second broadcast signal.

It may be understood that the first threshold is not a fixed value, and may be adjusted based on different application scenarios. This is not limited in embodiments of this application.

The second threshold is carried in a third broadcast signal, and the second threshold is a threshold for signal quality corresponding to the first broadcast signal or the second broadcast signal, and represents a threshold for enhancement for the message 3 or the message A.

Optionally, the second threshold may be specifically carried in a field "rsrp-thresholdMsg3" or "rsrp-thresholdMsgA", for example, BWP-UplinkCommon, in the third broadcast signal.

It may be understood that the second threshold is not a fixed value, and may be adjusted based on different application scenarios. This is not limited in embodiments of this application.

It may be understood that in this embodiment, it is equivalent to bind whether to perform uplink enhancement for a Msg5 with whether to perform uplink enhancement for the Msg3. When uplink enhancement needs to be performed for the Msg3, uplink enhancement needs to be performed for the Msg5; or when uplink enhancement does not need to be performed for the Msg3, uplink enhancement does not need to be performed for the Msg5.

Optionally, when the energy of the first broadcast signal is less than the second threshold, it is further determined that uplink transmission enhancement for the uplink data corresponding to the terminal device starts from the message 3 or the message A and uplink transmission enhancement ends upon receipt of an RRC reconfiguration message.

It may be understood that generally, a difference between uplink and downlink in a frequency division duplex (frequency division duplex, FDD) scenario mainly lies in small-scale fading of a channel. Because an NTN channel is dominated by a line of sight (line of sight, LOS) path, many statistical characteristics in the uplink and the downlink such as a transmission distance and an angle are basically the same. It can be considered that large-scale fading in the uplink and the downlink shows little difference, and path losses and the like in the uplink and the downlink may be referenced mutually. Therefore, whether PUSCH uplink enhancement needs to be performed may be determined based on RSRP of a downlink signal.

It may be understood that the thresholds (for example, the first threshold and the second threshold) in this embodiment of this application may be adjusted based on different application scenarios, for example, may be configured by using an "RSRP-Range" field.

Optionally, it is assumed that in a terrestrial scenario, a distance between a base station and a UE is short, energy that can be received by a UE side is strong, and an RSRP threshold may be configured to be higher. In a satellite scenario, the distance between the base station and the UE is long, signal energy received by the UE side is weak, and the RSRP threshold may be configured to be lower.

Optionally, RSRP thresholds required for different channel enhancement may be further configured. It is assumed that an uplink message 1 needs to carry 100 bits, and an uplink message 2 needs to carry 1 bit. Because uplink transmission enhancement requirements of the two types of messages are different, RSRP thresholds used to determine whether uplink transmission enhancement is performed may be different. For example, in a scenario in which the uplink message 1 and the uplink message 2 are transmitted, an RSRP threshold for the uplink message 1 may be less than an RSRP threshold for the uplink message 2.

In this embodiment of this application, an energy level of the first broadcast signal may be measured to determine that uplink data transmission enhancement corresponding to the terminal device needs to be requested, so that the network device can determine that uplink transmission performance of the terminal device needs to be enhanced. In this way, a signal path loss of a communication signal between the UE and the network device (a satellite base station) is overcome, and the uplink transmission performance is improved, so that the UE stably completes initial access.

In addition, this application further provides a method for resolving a conflict between an uplink data transmission occasion and an access occasion of a terminal device. It may be understood that steps in this embodiment of this application may be considered as a proper variation of or supplement to the embodiment in FIG. 4, FIG. 5, or FIG. 6. Alternatively, it may be understood that the method in this embodiment of this application may be considered as an embodiment that can be independently performed. This is not limited in this application. The method provided in this embodiment of this application is applied to the field of communication technologies, for example, random access in an NTN communication scenario. The method includes but is not limited to the following steps.

A network device further sends third information to the terminal device. Correspondingly, the terminal device receives the third information from the network device.

The third information indicates that in a case of time division multiplexing transmission, a slot occupied by uplink data transmission corresponding to the terminal device is different from a slot occupied by transmission of a message 1 in a four-step random access procedure corresponding to the terminal device, or the slot occupied by uplink data transmission corresponding to the terminal device is different from a slot occupied by transmission of a message A in a two-step random access procedure corresponding to the terminal device.

It may be understood that the third information indicates that in the case of time division multiplexing transmission, the slot occupied by uplink data transmission is different from the slot occupied by transmission of the message 1 (Msg1) in the four-step random access procedure, to avoid the conflict between the uplink data transmission occasion and the access occasion. Alternatively, the third information indicates that in the case of time division multiplexing transmission, the slot occupied by uplink data transmission is different from the slot occupied by transmission of the message A (MsgA) in the two-step random access procedure, to avoid the conflict between the uplink data transmission occasion and the access occasion.

Optionally, the third information further indicates that in a case of frequency division multiplexing transmission, the slot occupied by uplink data transmission corresponding to the terminal device is consecutive uplink slots.

It may be understood that because frequency division multiplexing transmission is used for uplink data transmission and random access message transmission, there is no problem that the uplink data transmission occasion conflicts with the access occasion. In this scenario, the slot occupied by uplink data transmission corresponding to the terminal device may be consecutive uplink slots, and the slot occupied by uplink data transmission may be different from or the same as a slot occupied by the access occasion. This may be specifically determined based on a requirement of the network device.

A problem to be resolved in this embodiment of this application is that consecutive uplink resources occupied by an uplink heavy-load PUSCH by using a TBoMS technology conflicts with an access opportunity RO resource, affecting an initial access process. If the PUSCH conflicts with the RO resource, when resources on a network side are limited, the PUSCH and a PRACH on an RO cannot be received at the same time. As a result, PUSCH transmission or the PRACH of the UE is affected, affecting performance in the initial access process.

In this embodiment, a field "AvailableSlotCounting" (available slot counting) is configured, so that PUSCH transmission avoids a slot in which the RO is located.

Optionally, in an NTN FDD scenario, when AvailableSlotCounting is set to enabled (enabled), a slot for PUSCH transmission needs to avoid the slot in which the RO is located. When AvailableSlotCounting is not configured, the slot for PUSCH transmission is consecutive uplink slots.

Optionally, when AvailableSlotCounting is configured to enabled (enabled), N*K slots for a TBoMS may include inconsecutive uplink slots, where N is a number of slots that need to be occupied for one TBoMS transmission, and K is a number of repetitions of transmission with the TBoMS.

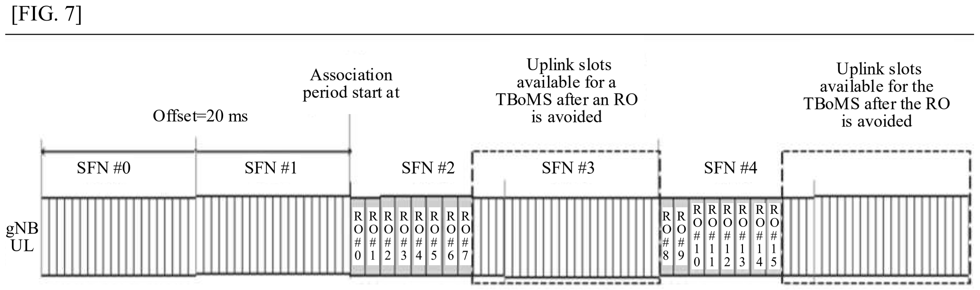

For details, refer to FIG. 7. FIG. 7 is a diagram of resolving an occasion conflict according to an embodiment of this application.

As shown in FIG. 7, after PUSCH transmission is enabled to avoid the RO, a network side receives only the PRACH from the UE side on the RO resource, and then receives a TBoMS PUSCH from the UE in a remaining uplink slot that avoids the RO resource.

In FIG. 7, for the slot, a subcarrier spacing (subcarrier spacing, SCS) of 30kHz is used as an example. Each system frame has 20 slots. An RO resource in every 20 ms occupies 16 slots in total, and therefore, remaining slots in every 20 ms are 24 slots. When the number of slots occupied by the TBoMS is greater than 24, the remaining slots need to occupy a second group of vacant slot resources. For example, in FIG. 7, 24 slots of SFNs #2 and #3 are insufficient, and remaining uplink slots in SFNs #4 and #5 that avoid the RO resource continue to be occupied.

When the network side configures the UE to avoid the uplink RO (AvailableSlotCounting is set to enabled), the UE transmits the PUSCH in an uplink slot avoiding the RO. The network side receives the PUSCH from the UE side in the corresponding uplink slot.

When the network side does not configure the UE to avoid the uplink RO (when AvailableSlotCounting is not configured), the UE does not need to avoid the uplink slot in which the RO is located, and may send the PUSCH in the slot in which the RO resource is located. The network side also receives the PUSCH from the UE side in the corresponding uplink slot.

Optionally, the network side may determine, based on a requirement, whether to configure AvailableSlotCounting. Specifically, when uplink data and a preamble are transmitted in a time division multiplexing manner, the network side determines to configure AvailableSlotCounting; or when the uplink data and the preamble are transmitted in a frequency division multiplexing manner, the network side determines not to configure AvailableSlotCounting. A purpose of configuring AvailableSlotCounting parameter is to avoid the slot in which the preamble (RO) is located during transmission of the uplink data (the PUSCH).

In this embodiment of this application, with the indication of the third information (AvailableSlotCounting), the slot occupied by uplink data transmission avoids a slot occupied by the access occasion, to avoid a conflict between a transmission resource for the uplink data and an access resource for the access occasion. This improves uplink transmission performance, so that the UE stably completes initial access.

The foregoing describes in detail the methods provided in embodiments of this application. The following provides an apparatus for implementing any one of the methods in embodiments of this application. For example, an apparatus including a unit (or means) for implementing steps performed by a device in any one of the foregoing methods is provided.

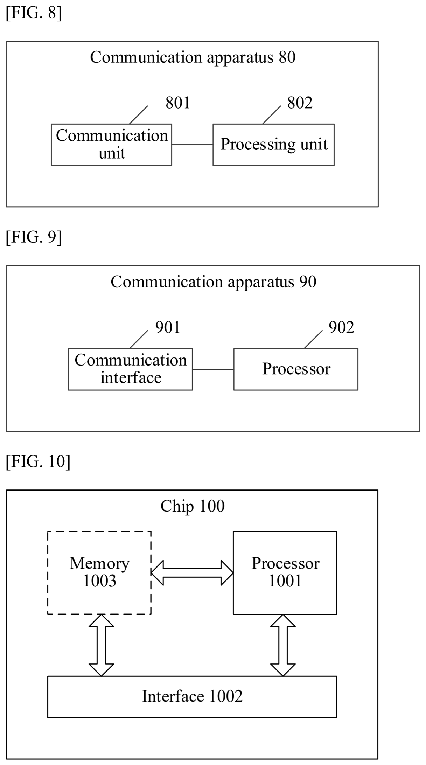

FIG. 8 is a diagram of a structure of a communication apparatus according to an embodiment of this application.

As shown in FIG. 8, the communication apparatus 80 may include a communication unit 801 and a processing unit 802. The communication unit 801 and the processing unit 802 may be software, hardware, or a combination of software and hardware.

The communication unit 801 may implement a sending function and/or a receiving function, and the communication unit 801 may also be described as a transceiver unit. Alternatively, the communication unit 801 may be a unit integrating an obtaining unit and a sending unit. The obtaining unit is configured to implement a receiving function, and the sending unit is configured to implement a sending function. Optionally, the communication unit 801 may be configured to receive information sent by another apparatus, and may be further configured to send information to the another apparatus.

In a possible design, the communication apparatus 80 may correspond to the terminal device in the method embodiments shown in FIG. 4, FIG. 5, and FIG. 6. For example, the communication apparatus 80 may be the terminal device, or may be a chip in the terminal device. The communication apparatus 80 may include units configured to perform the operations performed by the terminal device in the method embodiments shown in FIG. 4, FIG. 5, and FIG. 6. In addition, the units in the communication apparatus 80 are separately configured to implement the operations performed by the terminal device in the method embodiments shown in FIG. 4, FIG. 5, and FIG. 6. The units are described as follows.

The communication unit 801 is configured to perform input/output functions such as sending/receiving by the terminal device in the method embodiments shown in FIG. 4, FIG. 5, and FIG. 6.

The processing unit 802 is configured to perform processing functions such as generating information, detecting energy, and determining transmission enhancement by the terminal device in the method embodiments shown in FIG. 4, FIG. 5, and FIG. 6.

For a method performed by the processing unit 802 and the communication unit 801, refer to the methods corresponding to FIG. 4, FIG. 5, and FIG. 6. Details are not described herein again.

For technical effects brought by this design and any possible implementation, refer to the descriptions of the technical effects of the methods corresponding to FIG. 4, FIG. 5, and FIG. 6.

In another possible design of the communication apparatus 80 shown in FIG. 8, the communication apparatus 80 may correspond to the network device in the method embodiments shown in FIG. 4, FIG. 5, and FIG. 6. For example, the communication apparatus 80 may be the network device, or may be a chip in the network device. The communication apparatus 80 may include units configured to perform the operations performed by the network device in the method embodiments shown in FIG. 4, FIG. 5, and FIG. 6. In addition, the units in the communication apparatus 80 are separately configured to implement the operations performed by the network device in the method embodiments shown in FIG. 4, FIG. 5, and FIG. 6. The units are described as follows.

The communication unit 801 is configured to perform input/output functions such as sending/receiving by the network device in the method embodiments shown in FIG. 4, FIG. 5, and FIG. 6.

The processing unit 802 is configured to perform processing functions such as generating information by the network device in the method embodiments shown in FIG. 4, FIG. 5, and FIG. 6.

For a method performed by the processing unit 802 and the communication unit 801, refer to the methods corresponding to FIG. 4, FIG. 5, and FIG. 6. Details are not described herein again.

For technical effects brought by this design and any possible implementation, refer to the descriptions of the technical effects of the methods corresponding to FIG. 4, FIG. 5, and FIG. 6.

Optionally, in the communication apparatus according to any one of the foregoing designs and any one of the possible implementations:
in an implementation, the communication apparatus is a communication device; when the communication apparatus is the communication device, the communication unit may be a transceiver or an input/output interface, and the processing unit may be at least one processor; optionally, the transceiver may be a transceiver circuit; and optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

According to this embodiment of this application, the units in the apparatus shown in FIG. 8 may be separately or all combined into one or more other units, or a specific unit (or some specific units) in the apparatus may be further split into a plurality of units with more detailed functions. This can implement a same operation without affecting implementation of the technical effects of this embodiment of this application. The foregoing units are obtained through division based on logical functions. During actual application, a function of one unit may be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that for implementation of each unit, refer to the corresponding descriptions of the method embodiments shown in FIG. 4, FIG. 5, and FIG. 6.

According to the communication apparatus 80 described in FIG. 8, information for requesting uplink data transmission enhancement corresponding to the terminal device is carried in an RRC connection setup message, so that the network device can determine that uplink transmission performance of the terminal device needs to be enhanced. In this way, a signal path loss of a communication signal between the terminal device and the network device is overcome, and the uplink transmission performance is improved, so that the terminal device stably completes initial access.

FIG. 9 is a diagram of a structure of a communication apparatus according to an embodiment of this application.

It should be understood that the communication apparatus 90 shown in FIG. 9 is merely an example. The communication apparatus in this embodiment of this application may further include another component, or a component with a function similar to that of each component in FIG. 9, or does not necessarily need to include all components in FIG. 9.

The communication apparatus 90 includes a communication interface 901 and at least one processor 902.

The communication apparatus 90 may correspond to any node or device of a terminal device or a network device. The communication interface 901 is configured to receive and send signals. The at least one processor 902 executes program instructions, so that the communication apparatus 90 implements a corresponding procedure of the method performed by the corresponding device in the method embodiments.

In a possible design, the communication apparatus 90 may correspond to the terminal device in the method embodiments shown in FIG. 4, FIG. 5, and FIG. 6. For example, the communication apparatus 90 may be the terminal device, or may be a chip in the terminal device. The communication apparatus 90 may include components configured to perform the operations performed by the terminal device in the method embodiments. In addition, the components in the communication apparatus 90 are separately configured to implement the operations performed by the terminal device in the method embodiments. Details may be as follows.

The communication interface 901 is configured to perform input/output functions such as sending/receiving by the terminal device in the method embodiments shown in FIG. 4, FIG. 5, and FIG. 6.

The processor 902 is configured to perform processing functions such as generating information, detecting energy, and determining transmission enhancement by the terminal device in the method embodiments shown in FIG. 4, FIG. 5, and FIG. 6.

In another possible design, the communication apparatus 90 may correspond to the network device in the method embodiments shown in FIG. 4, FIG. 5, and FIG. 6. For example, the communication apparatus 90 may be the network device, or may be a chip in the network device. The communication apparatus 90 may include components configured to perform the operations performed by the network device in the method embodiments. In addition, the components in the communication apparatus 90 are separately configured to implement the operations performed by the network device in the method embodiments. Details may be as follows.

The communication interface 901 is configured to perform input/output functions such as sending/receiving by the network device in the method embodiments shown in FIG. 4, FIG. 5, and FIG. 6.

The processor 902 is configured to perform processing functions such as generating information by the network device in the method embodiments shown in FIG. 4, FIG. 5, and FIG. 6.

According to the communication apparatus 90 described in FIG. 9, information for requesting uplink data transmission enhancement corresponding to the terminal device is carried in an RRC connection setup message, so that the network device can determine that uplink transmission performance of the terminal device needs to be enhanced. In this way, a signal path loss of a communication signal between the terminal device and the network device is overcome, and the uplink transmission performance is improved, so that the terminal device stably completes initial access.

For a case in which the communication apparatus is a chip or a chip system, refer to a diagram of a structure of a chip shown in FIG. 10.

As shown in FIG. 10, the chip 100 includes a processor 1001 and an interface 1002. There may be one or more processors 1001, and there may be a plurality of interfaces 1002. It should be noted that functions corresponding to the processor 1001 and the interface 1002 may be implemented by using a hardware design, may be implemented by using a software design, or may be implemented by using a combination of software and hardware. This is not limited herein.

Optionally, the chip 100 may further include a memory 1003, and the memory 1003 is configured to store necessary program instructions and data.

In this application, the processor 1001 may be configured to invoke, from the memory 1003, a program for implementing, on one or more devices or nodes of the terminal device and the network device, the communication method provided in one or more embodiments of this application, and execute instructions included in the program. The interface 1002 may be configured to output an execution result of the processor 1001. In this application, the interface 1002 may be specifically configured to output messages or information of the processor 1001.

For the communication method provided in one or more embodiments of this application, refer to the embodiments shown in FIG. 4, FIG. 5, and FIG. 6. Details are not described herein again.

The processor in embodiments of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 4, FIG. 5, and FIG. 6 may be implemented.

According to the methods provided in embodiments of this application, an embodiment of this application further provides a computer program product. The computer program product includes a computer program. When the computer program is run on a processor, the methods shown in FIG. 4, FIG. 5, and FIG. 6 may be implemented.

An embodiment of this application further provides a system. The system includes at least one communication apparatus 80, at least one communication apparatus 90, or at least one chip 100, and is configured to perform steps performed by a corresponding device in any one of the embodiments in FIG. 4, FIG. 5, and FIG. 6.

An embodiment of this application further provides a system. The system includes a terminal device and a network device. The terminal device is configured to perform the steps performed by the terminal device in any one of the embodiments in FIG. 4, FIG. 5, and FIG. 6. The network device is configured to perform the steps performed by the network device in any one of the embodiments in FIG. 4, FIG. 5, and FIG. 6.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA); may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component; may be a system-on-a-chip (system-on-a-chip, SoC); may be a central processing unit (central processing unit, CPU); may be a network processor (network processor, NP); may be a digital signal processing circuit (digital signal processor, DSP); may be a micro controller unit (micro controller unit, MCU); or may be a programmable controller (programmable logic device, PLD) or another integrated chip. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any other proper type of memory.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state disc (solid-state disc, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
sending first information to a network device, wherein the first information is used to request uplink data transmission enhancement corresponding to a terminal device, and the first information is carried in a radio resource control RRC connection setup message of the terminal device; and
receiving second information from the network device, wherein the second information indicates uplink data transmission enhancement corresponding to the terminal device.

2. The method according to claim 1, wherein in a four-step random access procedure of the terminal device, the RRC connection setup message is carried in a message 3, and the second information is carried in a message 4.

3. The method according to claim 1, wherein in a two-step random access procedure of the terminal device, the RRC connection setup message is carried in a message A, and the second information is carried in a message B.

4. The method according to any one of claims 1 to 3, wherein the first information comprises one bit, a value of the bit is a first value, and the first value indicates that uplink data transmission enhancement corresponding to the terminal device is requested.

5. The method according to any one of claims 1 to 3, wherein the RRC connection setup message of the terminal device is carried in a media access control MAC layer data packet, and a packet header of the MAC layer data packet comprises a corresponding logical channel identifier indicating uplink data transmission enhancement corresponding to the terminal device.

6. The method according to any one of claims 1 to 5, wherein the second information comprises at least one of the following: a number of slots occupied by a transport block over multi-slot TBoMS and a number of repetitions of transmission with the TBoMS; and
the second information specifically indicates to transmit uplink data corresponding to the terminal device by using the TBoMS.

7. The method according to any one of claims 1 to 6, wherein the method further comprises:
receiving third information from the network device, wherein the third information indicates that in a case of time division multiplexing transmission, a slot occupied by uplink data transmission corresponding to the terminal device is different from a slot occupied by transmission of a message 1 in the four-step random access procedure corresponding to the terminal device, or the slot occupied by uplink data transmission corresponding to the terminal device is different from a slot occupied by transmission of the message A in the two-step random access procedure corresponding to the terminal device.

8. The method according to claim 7, wherein the third information further indicates that in a case of frequency division multiplexing transmission, the slot occupied by uplink data transmission corresponding to the terminal device is consecutive uplink slots.

9. A communication method, comprising:
receiving a first broadcast signal from a network device; and
when energy of the first broadcast signal is less than a first threshold, determining uplink data transmission enhancement corresponding to a terminal device; or
when the energy of the first broadcast signal is less than a second threshold, determining that transmission enhancement for uplink data corresponding to the terminal device starts from a message 3 or a message A.

10. The method according to claim 9, wherein the first threshold is carried in a second broadcast signal, the first threshold is a threshold for signal quality corresponding to the first broadcast signal or the second broadcast signal, and the signal quality comprises any one or more of the following:
reference signal received power RSRP, reference signal received quality RSRQ, a received signal strength indicator RSSI, a signal to interference plus noise ratio SINR, and a signal-to-noise ratio SNR.

11. The method according to claim 9, wherein the second threshold is carried in a third broadcast signal, the second threshold is a threshold for signal quality corresponding to the message 3 or the message A, and the signal quality comprises any one or more of the following:
a reference signal received power RSRP threshold, reference signal received quality RSRQ, a received signal strength indicator RSSI, a signal to interference plus noise ratio SINR, and a signal-to-noise ratio SNR.

12. A communication method, comprising:
receiving first information from a terminal device, wherein the first information is used to request uplink data transmission enhancement corresponding to the terminal device, and the first information is carried in a radio resource control RRC connection setup request message of the terminal device; and
sending second information to the terminal device, wherein the second information indicates uplink data transmission enhancement corresponding to the terminal device.

13. The method according to claim 12, wherein in a four-step random access procedure of the terminal device, the RRC connection setup message is carried in a message 3, and the second information is carried in a message 4.

14. The method according to claim 12, wherein in a two-step random access procedure of the terminal device, the RRC connection setup message is carried in a message A, and the second information is carried in a message B.

15. The method according to any one of claims 12 to 14, wherein the first information comprises one bit, a value of the bit is a first value, and the first value indicates that uplink data transmission enhancement corresponding to the terminal device is requested.

16. The method according to any one of claims 12 to 14, wherein the RRC connection setup message of the terminal device is carried in a media access control MAC layer data packet, and a packet header of the MAC layer data packet comprises a corresponding logical channel identifier indicating uplink data transmission enhancement corresponding to the terminal device.

17. The method according to any one of claims 12 to 16, wherein the second information comprises at least one of the following: a number of slots occupied by a transport block over multi-slot TBoMS and a number of repetitions of transmission with the TBoMS; and
the second information specifically indicates to transmit uplink data corresponding to the terminal device by using the TBoMS.

18. The method according to any one of claims 12 to 17, wherein the method further comprises:
sending third information to the terminal device, wherein the third information indicates that in a case of time division multiplexing transmission, a slot occupied by uplink data transmission corresponding to the terminal device is different from a slot occupied by transmission of a message 1 in the four-step random access procedure corresponding to the terminal device, or the slot occupied by uplink data transmission corresponding to the terminal device is different from a slot occupied by transmission of the message A in the two-step random access procedure corresponding to the terminal device.

19. The method according to claim 18, wherein the third information further indicates that in a case of frequency division multiplexing transmission, the slot occupied by uplink data transmission corresponding to the terminal device is consecutive uplink slots.

20. A communication method, comprising:
sending a first broadcast signal, wherein
the first broadcast signal is used together with a first threshold to determine uplink data transmission enhancement corresponding to a terminal device; or
the first broadcast signal is used together with a second threshold to determine that transmission enhancement for uplink data corresponding to the terminal device starts from a message 3 or a message A.

21. The method according to claim 20, wherein the first threshold is carried in a second broadcast signal, the first threshold is a threshold for signal quality corresponding to the first broadcast signal or the second broadcast signal, and the signal quality comprises any one or more of the following:
a reference signal received power RSRP threshold, reference signal received quality RSRQ, a received signal strength indicator RSSI, a signal to interference plus noise ratio SINR, and a signal-to-noise ratio SNR.

22. The method according to claim 20, wherein the second threshold is carried in a third broadcast signal, the second threshold is a threshold for signal quality corresponding to the message 3 or the message A, and the signal quality comprises any one or more of the following:
a reference signal received power RSRP threshold, reference signal received quality RSRQ, a received signal strength indicator RSSI, a signal to interference plus noise ratio SINR, and a signal-to-noise ratio SNR.

23. A communication apparatus, comprising a module or a unit configured to perform the method according to any one of claims 1 to 11 or claims 12 to 22.

24. A communication apparatus, comprising a processor, wherein
when the processor invokes a computer program or instructions in a memory, the method according to any one of claims 1 to 11 is performed, or the method according to any one of claims 12 to 22 is performed.

25. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 11 or claims 12 to 22, to obtain processed data, and the interface is configured to output the processed data.

26. A computer-readable storage medium, comprising:
the computer-readable storage medium is configured to store instructions or a computer program; and when the instructions or the computer program is executed, the method according to any one of claims 1 to 11 is implemented, or the method according to any one of claims 12 to 22 is implemented.

27. A computer program product, comprising instructions or a computer program, wherein when the instructions or the computer program is executed, the method according to any one of claims 1 to 11 is performed, or the method according to any one of claims 12 to 22 is performed.
